# EUROPEAN PATENT APPLICATION

(11) **EP 2 934 017 A1**
(43) Date of publication of application: **21.10.2015**
(21) Application number: 15162624.9
(22) Date of filing: 07.04.2015
(51) Int. Cl.: H04N 21/43, H04N 21/27, H04N 21/85

(54) **DISPLAY APPARATUS AND CONTROL METHOD THEREOF**

(30) Priority: 07.04.2014 KR 20140041199; 08.04.2014 KR 20140042042; 08.04.2014 KR 20140042040; 25.07.2014 KR 20140094491; 26.03.2015 KR 20150042643
(71) Applicant: Samsung Electronics Co., Ltd, Gyeonggi-do 443-742 (KR)
(72) Inventor: Yoon, Dae-won, Gyeonggi-do (KR); Kim, Min-seup, Seoul (KR); Kim, Soo-hwan, Gyeonggi-do (KR); Kim, Doo-young, Gyeonggi-do (KR); Roh, Min-gu, Gyeonggi-do (KR); Park, Chun-woo, Gyeonggi-do (KR); Lee, Yun-sun, Seoul (KR)
(74) Representative: Appleyard Lees

(57) **Abstract**

Provided herein is a display apparatus, a method thereof, a server, a method thereof, and a system including the display apparatus and the server. The display apparatus includes: a display configured to display a screen; and a processor configured to output for display, on the screen, a virtual channel list that includes at least one channel to which web-based service information is mapped, and to output for display, on the screen, a web content obtainable through a web-based service of the at least one channel of the virtual channel list according to a predetermined event.

## Description

### BACKGROUND

### 1. Field

Methods and apparatuses consistent with one or more exemplary embodiments relate to a display apparatus and a control method thereof, and more particularly, to a display apparatus configured to provide web-based contents, and a control method thereof.

### 2. Description of Related Art

Due to advances in electronic technologies, various types of electronic products are being developed and provided. In particular, various display apparatuses such as televisions (TVs), mobile phones, mobile devices, personal computers (PCs), notebook PCs, personal digital assistants (PDAs), etc., are being widely used in general households.

As more and more people use such display apparatuses, the demand for various functions has increased. Thus, manufacturers have attempted to meet this demand, and products with completely new functions have emerged.

Accordingly, the functions that can be performed by display apparatuses are diversifying and increasing. In particular, as display apparatuses such as TVs start to provide internet communication functions, various web-based contents are being provided as well. Thus, there is a need for a method of providing such web-based contents efficiently.

### SUMMARY

Aspects of one or more exemplary embodiments may provide a display apparatus capable of providing web-based contents in a familiar channel format and a control method thereof.

According to an aspect of an exemplary embodiment, there is provided a display apparatus including: a display configured to display a screen; and a processor configured to output for display, on the screen, a virtual channel list that includes at least one channel to which web-based service information is mapped, and to output for display, on the screen, a web content obtainable through a web-based service of the at least one channel of the virtual channel list according to a predetermined event.

The apparatus may further include: a storage configured to store the virtual channel list that includes the at least one channel to which the web-based service information is mapped, wherein the processor is configured to perform, in response to a channel zapping command being input, channel zapping on channels included in the virtual channel list successively, and to provide, in response to a channel to which the web-based service information is mapped being selected by the performed channel zapping, at least one web content provided through the web-based service corresponding to the selected channel.

The processor may be configured to, in response to the channel to which the web-based service information is mapped being selected, automatically reproduce, on the screen, the web content on the screen based on URL information of the web content provided through the web-based service corresponding to the selected channel.

The processor may be configured to output for display, on the screen, the virtual channel list, and in response to a channel being selected on the virtual channel list according to a channel browsing command, output for display, on the screen, a web content list that includes at least one web content provided through the web-based service mapped to the selected channel information.

The processor may be configured to output for display, on the screen, a list of the at least one web content provided through the web-based service mapped to the selected channel successively based on a time point when the web content is updated.

The processor may be configured to, in response to one web content being selected on the list, reproduce, on the screen, the web content based on URL information mapped to the selected web content.

The processor may be configured to control to move a channel on the virtual channel list in a predetermined direction according to the channel browsing command, and to arrange channel information of the selected channel on a predetermined area of the screen.

The at least one web content included in the web content list may be provided in a format of including at least one of a web content title, a reproducing time, a web content source, and summary information on a web content thumbnail.

The apparatus may further include: a communicator configured to communicate with a server that manages the web-based service and web contents obtainable through the web-based service in a channel format, wherein the processor may be configured to output for display a UI screen that groups the channel information to which the web-based service information is mapped and web content information of the web contents obtainable through the web-based service according to a predetermined standard based on information received from the server according to a predetermined event.

The processor may be configured to add, to the virtual channel list, the channel information to which the web-based service information is mapped selected according to the user command on the UI screen.

The predetermined standard for grouping the web content information may include at least one of a channel genre, a number of channel subscribers, channel popularity, and user account.

The at least one channel to which the web-based service information is mapped may include a channel that provides a social platform service.

The virtual channel list may further include at least one channel corresponding to a television broadcasting service, distinct from the web-based service.

According to an aspect of another exemplary embodiment, there is provided a server including: a communicator configured to communicate with an image processing apparatus; a storage configured to store information on a web-based service and on web contents provided through the web-based service in a predetermined channel format; and a processor configured to group channel information on the web-based service and the web contents provided through the web-based service, and to transmit at least one channel information of the grouped channel information to the image processing apparatus.

The processor may be configured to transmit the grouped channel information to the image processing apparatus according to a predetermined event.

The processor may be configured to transmit, in response to receiving, from the display apparatus, a subscription request for a channel that provides the web-based service, detailed information on the channel to the image processing apparatus.

The predetermined standard for grouping the web content information may include at least one of a channel genre, a number of channel subscribers, and channel popularity.

According to an aspect of another exemplary embodiment, there is provided a control method of an image processing apparatus, the method including: outputting, on a screen for display, a virtual channel list that includes at least one channel to which web-based service information is mapped; and outputting, on the screen, a web content obtainable through a web-based service of the at least one channel of the virtual channel list according to a predetermined event.

In response to a channel zapping command being input, the outputting the web content may include: performing channel zapping successively on channel included in the virtual channel list; and in response to a channel to which the web-based service information is mapped being selected, providing at least one web content provided through the web-based service corresponding to the selected channel.

According to an aspect of another exemplary embodiment, there is provided a control method of a server that stores information on a web-based service and on a web content provided through the web-based service, the method including: grouping the information on the web-based service and on a web content provided through the web-based service according to a predetermined standard; and transmitting at least one channel information of the grouped channel information to the image processing apparatus according to a predetermined event.

According to an aspect of another exemplary embodiment, there is provided a system including: a server configured to group channel information on a web-based service and on web content provided through the web-based service according to a predetermined standard, and to transmit at least one channel information of the grouped channel information to an image processing apparatus according to a predetermined event; and the image processing apparatus configured to output for display, on a screen, a virtual channel list that includes at least one channel to which web-based service information is mapped based on the at least one channel information received from the server, and to output for display, on the screen, web content provided through a web-based service of the virtual channel list according to a predetermined event.

According to an aspect of another exemplary embodiment, there is provided an image processing apparatus including: a processor configured to output for display, on a screen, a virtual channel list that includes at least one channel to which web-based service information is mapped, and to output for display, on the screen, a web content obtainable through a web-based service of the at least one channel of the virtual channel list according to a predetermined event.

The image processing apparatus may further include a display configured to display the screen.

The processor may be configured to output the screen for display on an external display device.

The image processing apparatus may further include: a storage configured to store the virtual channel list that includes the at least one channel to which the web-based service information is mapped, wherein the processor may be configured to perform, in response to a channel zapping command being input, channel zapping on channels included in the virtual channel list successively, and to provide, in response to a channel to which the web-based service information is mapped being selected by the performed channel zapping, at least one web content provided through the web-based service corresponding to the selected channel.

The processor may be configured to, in response to the channel to which the web-based service information is mapped being selected, automatically reproduce, on the screen, the web content on the screen based on URL information of the web content provided through the web-based service corresponding to the selected channel.

The processor may be configured to output for display, on the screen, the virtual channel list, and in response to a channel being selected on the virtual channel list according to a channel browsing command, output for display, on the screen, a web content list that includes at least one web content provided through the web-based service mapped to the selected channel information.

The processor may be configured to output for display, on the screen, a list of the at least one web content provided through the web-based service mapped to the selected channel successively based on a time point when the web content is updated.

According to aspects of one or more exemplary embodiments, web-based contents are provided to a user in a familiar channel format, thereby improving user convenience.

### BRIEF DESCRIPTION OF THE DRAWINGS

The above and/or other aspects will be more apparent by describing certain exemplary embodiments with reference to the accompanying drawings, in which:
FIG. 1 is a view for explaining a display system according to an exemplary embodiment;
FIG. 2A is block diagram of a configuration of a display apparatus according to an exemplary embodiment;
FIG. 2B is a block diagram of a configuration of a display apparatus according to an exemplary embodiment;
FIG. 3 is a block diagram of a configuration of a server according to various exemplary embodiments;
FIG. 4A is a view for explaining a virtual channel structure according to an exemplary embodiment;
FIG. 4B is a view illustrating a configuration of a virtual channel list according to an exemplary embodiment;
FIGs. 5A and 5B are views illustrating a configuration of a UI screen according to an exemplary embodiment;
FIGs. 6A, 6B, and 6C are views illustrating a configuration of a UI screen according to another exemplary embodiment;
FIG. 7 are views illustrating a configuration of a UI screen according to another exemplary embodiment;
FIGs. 8A and 8B are views for explaining a zapping operation according to a channel zapping command according to an exemplary embodiment;
FIGs. 9A and 9B are views illustrating a configuration of a UI screen according to another exemplary embodiment;
FIGs. 10A and 10B are views illustrating a configuration of a UI screen according to another exemplary embodiment;
FIGs. 11A, 11B, and 11C are views illustrating a web content and a state of web-based service channel according to an exemplary embodiment;
FIG. 12 is a view for explaining a channel that shows web contents of all channels according to an exemplary embodiment;
FIG. 13 is a view for explaining a channel browsing operation in a UI screen that includes a virtual channel list according to an exemplary embodiment;
FIGs. 14A and 14B are views illustrating a UI screen that includes a virtual channel list according to another exemplary embodiment;
FIG. 15 is a view illustrating a UI screen according to another exemplary embodiment;
FIG. 16 is a view illustrating a UI screen according to another exemplary embodiment;
FIGs. 17A to 22F are views illustrating a UI screen that provides a GUI changeable to various formats according to another exemplary embodiment;
FIG. 23 is a flowchart for explaining a method for controlling a display apparatus according to another exemplary embodiment; and
FIG. 24 is a flowchart for explaining a method for controlling a server according to another exemplary embodiment; and

### DETAILED DESCRIPTION

Certain exemplary embodiments are described in greater detail below with reference to the accompanying drawings.

In the following description, like drawing reference numerals are used for the like elements, even in different drawings. The matters defined in the description, such as detailed constructions and elements, are provided to assist in a comprehensive understanding of exemplary embodiments. However, exemplary embodiments can be practiced without those specifically defined matters. Also, well-known functions or constructions are not described in detail since they would obscure the application with unnecessary detail. Expressions such as "at least one of," when preceding a list of elements, modify the entire list of elements and do not modify the individual elements of the list.

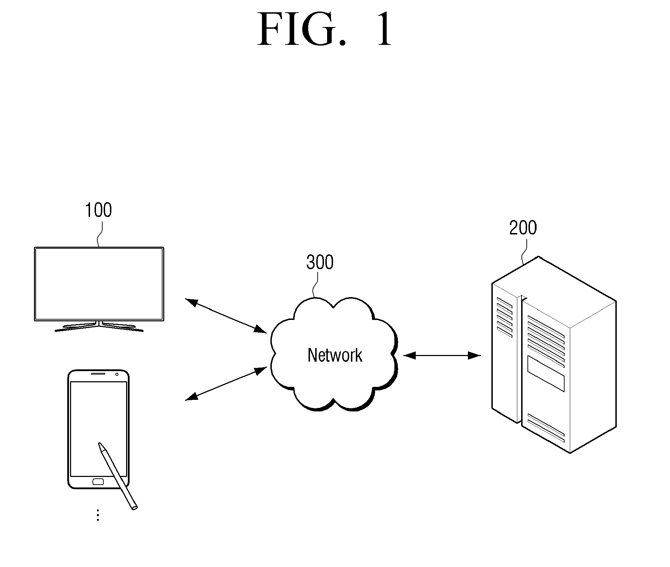

FIG. 1 is a view for explaining a display system according to an exemplary embodiment.

Referring to FIG. 1, the display system according to an exemplary embodiment includes a display apparatus 100 and server 200.

The display apparatus 100 may be configured as a digital TV, but without limitation thereto, and thus the display apparatus 100 may be realized as any of various types of apparatuses such as a smart phone, a smart device, a mobile device, a tablet PC, a portable multimedia player (PMP), a PDA, a navigation device, and the like. Furthermore, it is understood that one or more other exemplary embodiments may be implemented as image processing devices, such as a set-top box, a media streaming device, a media receiver, an audio/video receiver, a projector device, a standalone device, etc., that outputs an image or an image signal to an external screen or external display.

The display apparatus 100 may be configured to communicate with a server 200 and a network 300 to receive information on a web-based service and on a web content that may be provided by the web-based service, and to provide the web content in a virtual channel format.

Specifically, the display apparatus 100 may configure the web-based service provided from the server 200 as one virtual channel, and provide the virtual channel in a channel format that may be interfaced directly by a user together with an existing broadcast channel. In such a case, the virtual channel that provides the web-based service may be realized in a format of reproducing the web content being provided through the corresponding web-based service.

For example, the virtual channel may be realized to provide a web-based social media (or social platform service) in a channel format, and to provide through the channel a reproducible social media content available through the social media service. However, it is understood that one or more other exemplary embodiments are not limited thereto. For example, the web-based service may be realized in any of various formats including, e.g., a web-based service being provided by a service operator that provides a virtual channel service according to an exemplary embodiment, and a web- based service being provided by a service operator that provides a paid premium content. Furthermore, in some cases, a plurality of web contents provided through different platforms may be grouped in one channel and provided as such.

Meanwhile, a virtual channel service according to an exemplary embodiment may be provided in the format of a software application executable by at least one hardware processor or processing element, and the application may be provided in an icon interface format on a screen of the display apparatus 100. However, it is understood that one or more other exemplary embodiments are not limited thereto. For example, according to another exemplary embodiment, when subscribed to a virtual channel service, the application may be provided in a menu format through the corresponding service.

The server 200 is configured to manage various information for providing the virtual channel service in the display apparatus 100. In particular, the server 200 may manage information on various web-based services provided through the virtual channel service and web contents provided through the corresponding web-based service.

Hereinafter, various exemplary embodiments will be explained in detail based on a configuration of the display apparatus 100 and server 200.

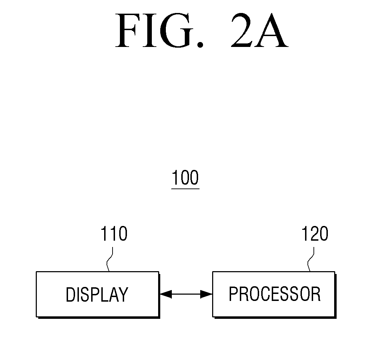

FIG. 2A is a block diagram illustrating a configuration of a display apparatus 100 according to an exemplary embodiment.

Referring to FIG. 2A, the display apparatus 100 includes a display 110 and processor 120. However, it is understood that one or more other exemplary embodiments are not limited thereto. For example, some components may be excluded and/or other components may be added, and one or more components may be realized in one chip in a system-on-chip (SOC) format.

The display 110 displays or outputs a screen. Herein, the screen may include various contents such as an image, a video, a text, and music, an application execution screen including various contents, a Graphic User Interface (GUI) screen, and so forth.

The display 110 may group a virtual channel list that includes at least one of channel information to which web-based service information is mapped according to an exemplary embodiment according to a predetermined event, a web-content reproducing screen, a channel information screen, a web content information screen, a web-based service screen, a web-based service account information screen, and a web content information screen. Furthermore, the display 110 may display a UI screen.

Meanwhile, the display 110 may be, but without limitation, realized as a Liquid Crystal Display (LCD) panel, an Organic Light Emitting Diode (OLED) display, a plasma display, etc.

The processor 120 is configured to control operations (e.g., overall operations) of the display apparatus 100.

In particular, the processor 120 configures a virtual channel list that includes at least one channel to which the web-based service information is mapped, and through the virtual channel list, provides a web content that may be provided through the web-based service on the screen according to a predetermined event. Herein, the predetermined event may be an event where a channel selecting command, a channel zapping (e.g., surfing) command, a channel browsing command, or a list display command is input. However, it is understood that one or more other exemplary embodiments are not limited thereto. For example, in some cases, the event may be any of an event of turning on the display apparatus 100, an event where a user command is not input for a predetermined period of time, etc.

### <Providing a screen according to a channel zapping command >

According to an exemplary embodiment, the processor 120 may perform a channel zapping successively for channels included in a pre-stored virtual channel list in response to a channel zapping command being input. That is, the processor 120 may perform channel zapping on not only existing broadcast channels that have their bases in frequencies selected through an existing tuner, but also perform channel zapping in a virtual channel list that includes a web-based channel that has its basis in an Internet Protocol (IP) address provided through an open application program interface (API). Herein, the open API refers to an API that has been opened so that an Internet user may receive a web search result and a user interface (UI), as well as directly develop an application program and service. However, in some cases, it is possible to call not only an IP address, but also a user account identifier (ID) and related information.

However, it is understood that one or more other exemplary embodiments are not limited thereto. For example, the virtual channel list may include one or more web-based service channels to which one or more web-based services are mapped, without including other types of channels (e.g., broadcast channels). That is, the channel list may be managed separately from a list including broadcast channels. In this case, the user may receive services for channels of each channel list through a selected viewing mode, for example, a broadcast channel viewing mode and a web-based channel viewing mode.

Meanwhile, the processor 120 may automatically reproduce at least one web content provided through the corresponding web-based service in response to a channel providing the web-based service being selected according to a channel zapping command. In this case, the processor 120 may control such that the corresponding web content is reproduced automatically on the screen based on URL information of the web content being provided in the selected web-based channel. That is, in response to the web-based channel being selected, the corresponding web content may be automatically reproduced by successively performing a command of selecting and reproducing the web content to which the corresponding channel is mapped. In this case, the web content automatically reproduced according to the channel zapping command may be a content determined according to various standards or settings such as representative content, a recently updated content, or a most recommended content of the virtual channel of the corresponding web-based service, or a content being automatically mapped according to a standard or setting predetermined by the user. Furthermore, when selecting a channel, the processor 120 may reproduce a content as well as receive and provide information such as text, a subtitle, metadata and the like.

Meanwhile, the web-based channel may include at least one of a social media channel, a paid media channel, and a self-produced channel.

The social media channel may be a channel that provides a content group that is run by service platform operators providing web content services. The channel may provide a web content group provided as an open API. In this case, the grouped contents may be uploaded by a manager of each allocated operator or may be managed in a shared manner.

The paid media channel may refer to a channel that provides a service for a content group that the user wants allocated from service operators that provide paid premium contents, for example, a monthly paid service and a video-on-demand (VOD) service.

The self-produced channel may be a channel that the operator providing the virtual channel service directly produces and provides. For example, an operator may produce and provide a channel for providing popular contents of the web contents being provided through difference platforms.

Furthermore, the processor 120 may provide a UI screen that does not include existing electronic program guide (EPG) lists but includes a pre-stored virtual channel list at a user's command. Accordingly, the user is able to browse web-based contents provided by the web-based channel and the corresponding channel through the virtual channel list.

Herein, the UI screen that includes the virtual channel list may be provided in a format in which the virtual channel list and a web content list provided through the selected channel are included. Specifically, the UI screen may be configured such that the user may check information on the selected channel or thumbnails of clips of other channels, and select a clip and immediately reproduce the clip while reproducing the web content of a selected channel. The UI screen may be provided in an L-bar format, although it is understood that one or more other exemplary embodiments are not limited thereto.

Meanwhile, a virtual channel list according to an exemplary embodiment may be created and edited by the user.

That is, the user may select a web-based channel and add the selected web-based channel to the virtual channel list or delete the selected web-based channel from the virtual channel list. Accordingly, the virtual channel list may be provided through an authentication process for the user account. That is, the processor 120 may provide the virtual channel list that corresponds to the user in response to the authentication process for the user account being performed. Furthermore, in the case where a service has been just started and thus the virtual channel list is empty, the processor 120 may recommend a web channel list in a check list format and induce or recommend the user to configure a channel list.

Furthermore, the processor 120 may communicate with the server 200 and update information mapped to the pre-stored virtual channel list. Specifically, the processor 120 may request the server 200 to synchronize the information mapped to the pre-stored virtual channel list.

Specifically, the virtual channel list may be mapped to at least one channel information of a channel number, a channel title, a channel summary information, a web-based service information source, and a number of web-based service information subscribers. Furthermore, at least one content information of a content title, a reproducing time, a content source, and a summary information of the web content provided in the corresponding channel may be mapped. Such various information may be updated by a request to or of the server 200 that manages the corresponding information.

However, it is understood that one or more other exemplary embodiments are not limited thereto. For example, in some cases, a synchronization may be performed automatically in an event of a predetermined period or a predetermined event.

Meanwhile, in the aforementioned exemplary embodiment, it was explained that the virtual channel list includes a broadcast channel and all the web-based service channels that provide web-based services. However, it is understood that one or more other exemplary embodiments may be applied to cases where the virtual channel list includes only the web-based service channel.

### <Providing a UI screen that includes a web content grouped according to a predetermined standard>

In particular, the processor 120 may group the channel information to which the web-based service information is mapped and the web content information that may be provided through the web-based service according to a predetermined standard based on information received from the server 200 according to a predetermined event and display a UI screen that displays the grouped information. Herein, the predetermined event may be an event of a user command for displaying the UI being input, and the predetermined standard may include at least one of a channel genre, a number of channel subscribers, a channel popularity list, and user account information. Specifically, the processor 120 may provide a UI screen where there is grouped at least one category menu of a first channel category that provides channels based on a popularity list, a second channel category that provides channels based on a user account, and a third channel category that provides channels for each genre, and channel information corresponding to each category menu channel information. Furthermore, in each category, channels may be listed in the order of popularity (for example, number of subscribers, number of links, number of likes, etc.). For example, the first channel category that provides channels based on the order of popularity may align and provide the channels in the order of popularity computed based on the weekly or monthly number of subscribers and links regardless of genre.

Furthermore, the second category that provides channels based on the user account may align and provide the channels registered in a corresponding account and web contents provided from the corresponding channel in response to a log-in to the user account. In this case, the channels may be aligned and provided according to the order of popularity or an order directly set by the user. Additionally, when the user account is not logged-in, the second category may align and provide the channels and web contents being provided form the channels based on a number of users subscribed to the service.

Moreover, the third channel category that provides channels for each genre may provide sub menus corresponding to various genres such as Comic, Sport, Shopping, Fashion, Music, Information Technology (IT), Game, Movie, Health, Education, etc., and group the web-based channels belonging to a corresponding genre in the sub menu corresponding to each genre and provide the grouped channels.

Furthermore, in response to a channel being selected in the aforementioned UI screen, the processor 120 may provide detailed information of the selected channel. For example, the processor 120 may provide information such as text, metadata, preview images in clip units, thumbnails, etc.

The processor 120 may add the channel information selected in the aforementioned UI screen to the virtual channel list that includes at least one channel to which the broadcast contents are mapped and at least one channel to which the web-based service information is mapped and store the same. Herein, the at least one channel to which the web-based service information is mapped may be an IP address-based channel that provides web-based services.

### <Providing a screen according to a channel browsing command>

The processor 120 may display (e.g., output for display) a UI screen that includes the virtual channel list including the channels to which the web-based service information is mapped, and may display a web content list screen provided in the selected channel according to a channel browsing command by the user. However, in some cases, the processor 120 may provide a TV channel list that may be provided by a broadcast transmission operator.

Furthermore, the processor 120 displays a web content list provided in the channel according to a user's channel browsing command. Herein, the web contents may be provided in an order of recently updated, in an order of preference based on a record of the user's preference, etc.

Herein, the web content list may include a web content provided through the web-based service mapped to the channel selected according to the channel browsing command. For example, the web content list may include a web content provided by a manager of the corresponding web-based service or a web content provided by a manager of a certain account of the corresponding web-based service (for example, web-based service subscriber). In this case, the web content may be a video provided through the corresponding web-based service, or other types of web-contents (for example, still image and text). Herein, the at least one web content included in the web content list may be provided in a format that includes at least one of a web content title, a reproducing time, a web content source, and summary information on the web content thumbnail.

Meanwhile, the UI screen that includes the virtual channel list and the web content list according to the present exemplary embodiment may be provided in an L bar format. For example, the virtual channel list may be provided in up down direction on a left area of the screen, while the web content list is provided in a left right direction on a bottom area of the screen. In this case, the processor 120 may control to move a channel on the virtual channel list to a predetermined direction according to the user's channel browsing command, so that channel information on the selected channel is arranged on a predetermined area. For example, the channel may be moved to the bottom direction of the virtual channel list so that the selected channel is arranged in a corner of the left bottom area of the screen.

Furthermore, the processor 120 may display at least one of a transparency and a size of the channel information other than the selected channel information and the corresponding web content list differently. Herein, the channels included in the virtual channel service may include at least one channel information of a channel number, a channel title, a channel summary information, a web-based service source, and a number of web-based service subscribers.

Moreover, in response to a web content being selected from the web content list, the processor 120 may display detailed information of the selected web content.

Also, after displaying the web content list corresponding to the channel selected according to the channel browsing command, in response to a certain web content being selected from the web content list, the processor 120 may display the corresponding web content. For example, in response to the selected web content being a video, the processor 120 may reproduce and provide the video. In this case, the processor 120 may access the video based on a URL address linked to the corresponding web content, and automatically reproduce and provide the accessed video. However, in some cases, the web content may be downloaded and pre-stored in the display apparatus 100, in which case, the processor 120 may directly reproduce and provide the video.

### <Providing a GUI that may be changed into various formats>

According to another exemplary embodiment, the processor 120 may display a GUI that is convertible into various formats.

For example, after an image content is displayed, in response to a first user command being input, the processor 120 may display a GUI that guides (e.g., informs) that the mode of the display apparatus 100 is a first mode. Then, in response to predetermined second user command being input, the processor 120 may change at least one of a position and a format of the GUI and guide that the mode of the display apparatus 100 is a second mode, and display a content list together with the image content. Furthermore, after at least one content is selected from the content list, in response to a predetermined second user command being input, the processor 120 may change at least one of a position and a format of the GUI and guide that the mode of the display apparatus 100 is a third mode, and display a library list that includes contents related to the selected content.

By way of another example, after the GUI guiding that the mode of the display apparatus 100 is the first mode is displayed, in response to a predetermined third user command being input, the processor 120 may change at least one of a position and a format of the GUI, and guide that the mode of the display apparatus 100 is a third mode, and display a library list that includes contents related to the selected content.

In this case, the processor 120 may display the content list or a library list of the image content in an overlapped manner, although it is understood that one or more other exemplary embodiments are not limited thereto.

Furthermore, in response to a certain (e.g., predetermined) user command being input, the processor 120 may use at least one of a certain user information and information predetermined by the certain user to change at least one of a shape and a color of the GUI and display the GUI. For example, in response to a certain user command identifying a user 'A' being input, the processor 120 may use information that user 'A' views movies frequently and change the shape of the GUI into a 'camera shape', or use information on blue color and star shape predetermined by the user, and change the GUI into a star-shaped, blue GUI.

Also, in response to a certain user command being input, the processor 120 may display a content list that includes contents related to the certain user. For example, in response to a certain user command identifying user 'A' being input, the processor 120 may display a content list that includes contents related to dramas that user 'A' prefers.

Moreover, in response to a certain content being selected from the content list, the processor 120 may determine a function (for example, a broadcast recording function) that the user prefers among the functions related to the corresponding content, and display a guide message corresponding to the determined function (for example, 'Shall I record this program today as well?') on an area near the GUI.

Furthermore, after an icon (for example, camera-shaped icon) representing a certain type of content is displayed in the GUI, in response to a user command for moving a focus (e.g., a highlight) on the content list being input, the processor 120 may move a select GUI (for example, cursor, highlight, focus, etc.) (hereinafter referred to as cursor) to the content corresponding to the certain type that the icon represents on the content list (for example, content related to movies corresponding to the camera shaped icon).

Furthermore, in response to a user command for moving a highlight to another content while a cursor is on a certain content of the content list being input, the processor may move the GUI near the other content where the highlight is moved at the same time of moving the cursor and display the GUI.

As described above, a user is able to move a GUI that is convertible into various formats and control the screen that the user is viewing and a plurality of contents provided on the screen more intuitively.

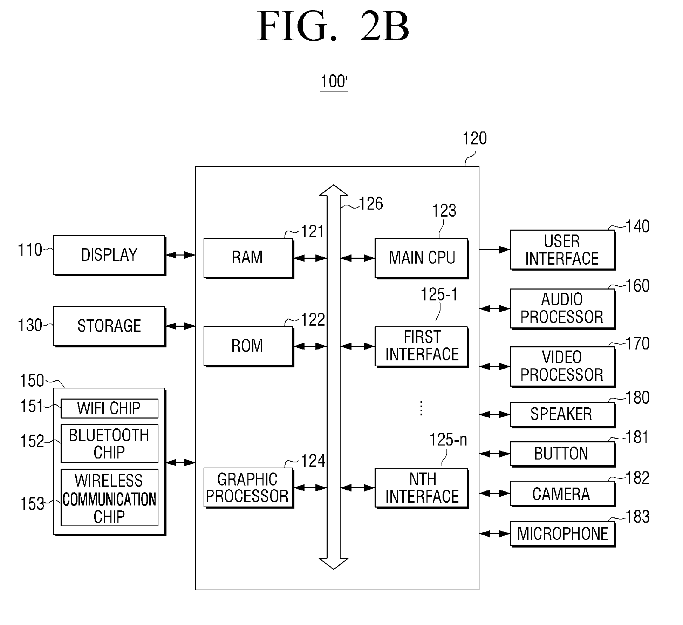

FIG. 2B is a block diagram of a configuration of a display apparatus 100' according to an exemplary embodiment. Referring to FIG. 2B, the display apparatus 100' includes a display 110, a controller 120 (e.g., processor), a storage 130, a user interface 140, a communicator 150, an audio processor 160, a video processor 170, a speaker 180, a button 181, a camera 182, and a microphone 183.

The storage 130 stores various data such as an operating system (O/S) software module for driving the display apparatus, various applications,

The storage 130 stores various modules for driving the display apparatus. For example, the storage 130 may store software that includes at least one of a base module, a sensing module, a communication module, a presentation module, a web browser module, a service module, etc. Herein, the base module is a basic module for processing a signal transmitted from each hardware and for transmitting the processed signal to a higher layer module. The sensing module is a module for collecting information from various sensors and for analyzing the collected information, and may include a face recognition module, a voice recognition module, a motion recognition module, and a near field communication (NFC) recognition module. The presentation module is a module for configuring a display screen, and may include a multimedia module for reproducing and outputting a multimedia content, a UI, etc., and a UI rendering module for graphic processing. The communication module is a module for communicating with an external apparatus. The web browser module is a module for performing web browsing and accessing a web server. The service module is a module including various applications to provide various services.

The storage 130 may store a virtual channel list that includes at least one channel of a broadcast channel and a channel to which a web-based service information is mapped, and various information (for example, a web-based service mapped to each virtual channel list, detailed information on a web content of a web-based service, and URL information) for configuring a screen that provides the virtual channel list. Herein, the at least one channel to which the web-based service information is mapped may be an IP address based channel that provides web-based services. That is, the storage 130 may store at least one virtual channel list that includes an existing broadcast channel that has its basis in a frequency selected through a tuner, as well as a web-based channel that has its basis in an IP address provided through an open API.

Furthermore, according to another exemplary embodiment, the storage 130 may store various information (for example, information on contents preferred by a certain user) related to a certain user, information on standards for classifying contents in a library list, and information related to the GUI shape (for example, information on the shape and color of the GUI set by the certain user).

The user interface 140 receives various user commands.

In particular, the user interface 140 may receive a channel selecting command, a channel zapping command, a channel browsing command, a user command for displaying a UI screen including channel information, and various user manipulation commands on the corresponding UI screen.

Furthermore, the user interface 140 may receive a user command for changing the mode of the display apparatus 100', and various user commands related to changing the GUI.

The user interface 140 may be realized in any of various formats according to one or more exemplary embodiments. For example, in a case where the display apparatus 100 is realized as a digital TV, the user interface 140 may be realized as a remote control receiver configured to receive remote control signals from a remote control apparatus 200, although it is understood that one or more other exemplary embodiments are not limited thereto. For example, the user interface 140 may instead be realized as a microphone that receives a user voice, a key provided in a panel, a touch screen, a trackpad, a gesture input, etc.

The communicator 150 may perform communication with an external device according to various types of communication methods. The communicator 150 includes various communication chips such as a Wifi chip 151, a Bluetooth chip 152, a wireless communication chip 153, an NFC chip, etc. The Wifi chip 151 and the Bluetooth chip 152 each perform communication in a Wifi method and a Bluetooth method, respectively. The wireless communication chip 153 refers to a chip that performs communication according to various communication standards such as IEEE, Zigbee, 3rd Generation (3G), 3rd Generation Partnership Project (3GPP), and Long Term Evolution (LTE).

The communicator 150 may communicate with a server 200. Herein, the server 200 may manage information on a web-based service and a web content that may be provided through the web-based service in a channel format, and may provide the information to the display apparatus 100 according to a predetermined event. For example, the server 200 may manage channels based on at least one of a genre of the web-based service channel, channel popularity, user account, etc.

As described above, the communicator 150 may communicate with the server 200 (FIG. 1) to receive and transmit various information. For example, in a case where the virtual channel list according to an exemplary embodiment is managed in the server 200, information on a corresponding virtual channel list may be transmitted to the server 200. In this case, the processor 120 may provide information on at least one channel to which the web-based service information received from the server 200 is mapped, and in response to a certain channel being selected at a user's command, the processor may add the selected channel to the virtual channel list stored in the storage 130.

The audio processor 160 is a component that processes audio data. The audio processor 160 may perform various processes such as decoding, amplifying, and noise filtering on the audio data.

The video processor 170 is a component that processes video data. That video processor 170 may perform various processes such as decoding, scaling, noise filtering, frame rate converting, and various image processes such as resolution converting and the like.

The speaker 180 is a component that outputs various processed audio data, various alarm sounds, voice messages etc. The camera 182 is a component for photographing or capturing a still image or a video according to user's control. The camera 182 may be configured as a plurality of cameras including a front camera, a rear camera, a left-eye camera, a right-eye camera, etc. The microphone 183 is a component for receiving user's voice or other sound and converting the same into audio data. The processor 120 may use the user's voice input through the microphone 183 in a call process, or convert the user's voice into audio data and store the audio data in the storage 130. Where there is provided a camera 182 and a microphone 183, the processor 120 may perform various control operations such as channel zapping operations according to a user's motion recognized by the camera 183 or the user's voice. Furthermore, various external input ports such as headsets, a mouse, and a local area network LAN adapter or cable may be further included for connection with various external terminals.

The processor 120 controls operations (e.g., overall operations) of the display apparatus 100' using various programs stored in the storage 130.

For example, the processor 120 may execute an application stored in the storage 130 to configure its execution screen and display the screen, and may reproduce various contents stored in the storage 130. Furthermore, the processor 120 may communicate with various external devices through the communicator 130.

Specifically, the processor 120 includes a random access memory (RAM) 141, a read only memory (ROM) 142, main central processing unit (CPU) 143, a graphics processor 144, first to nth interfaces 145-1 ∼ 145-n, and a bus 146.

The RAM 141, the ROM 142, the main CPU 143, the graphics processor 144, and the first to nth interfaces 145-1 ∼ 145-n may be connected to one another through a bus 146.

The first to nth interfaces 145-1 ∼ 145-n are connected to the various aforementioned components. One of the interfaces may be a network interface to be connected with an external apparatus through a network.

The main CPU 143 accesses the storage and performs booting using the O/S stored in the storage 130. Furthermore, the main CPU 143 performs various operations using various programs, contents, and data stored in the storage 130.

The ROM 142 stores a command set for booting the system. In response to a turn on command being input and power being supplied, the main CPU 143 copies the O/S stored in the storage 130 according to a command stored in the ROM 142, and executes the O/S to boot the system. In response to the booting being completed, the main CPU 143 copies various application programs stored in the storage 130 to the RAM 141, and executes the application programs copied to the RAM 141 to perform various operations.

The graphics processor 144 creates a screen that includes various objects such as an icon, an image, and a text using an arithmetic operator and a renderer. The arithmetic operator performs arithmetic operations on attribute values such as a coordinate, a shape, a size, and a color for each object to be displayed according to a layout of the screen based on a received control command. The renderer creates a screen of various layouts including an object based on the attribute values arithmetically operated in the arithmetic operator. The screen created in the renderer is displayed within a display region of the display 110.

It is understood that FIG. 2B illustrates an example of components included in a display apparatus 100' according to an exemplary embodiment, and one or more other exemplary embodiments are not limited thereto. For example, in one or more other exemplary embodiments, some of the components illustrated in FIG. 2B may be omitted or changed, and other components may be further added.

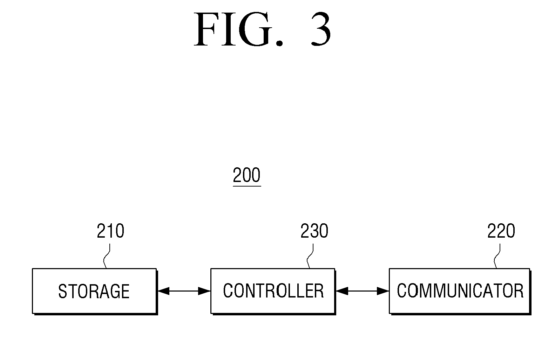

FIG. 3 is a block diagram illustrating a configuration of a server 200 according to various exemplary embodiments.

Referring to FIG. 3, the server 200 includes a communicator 220, a storage 210, and a controller 230 (e.g., processor).

The server 200 is configured to store and manage various web-based contents according a predetermined standard.

The storage 210 may store information on a web-based service and on a web-content that may be provided through the web-based service in a channel format. That is, the storage 210 may store information on channels providing the web-based service and information on the web-contents provided in the channels. For example, the storage 210 may store information on channels corresponding to a social media platform and information on web contents provided through the platform.

The communicator 220 communicates with the display apparatus 100, 100'.

Specifically, the communicator 220 may provide web-based channel information that provides the web-based service and information on the web contents being provided through the channels stored in the storage 210.

The processor 230 groups and manages the web-based channel information and information on the web contents provided in the channel according to a predetermined standard. Furthermore, the processor 230 may transmit the channel information grouped to the display apparatus 100, 100' according to a predetermined event. For example, the processor 230 may group the contents streamed through the web but also contents provided from the display apparatus 100, 100' itself and manage the grouped contents.

The processor 230 may group the channels based on at least one of a channel genre, a number of channel subscribers, a channel popularity, and user account information of the web-based channel and manage the grouped channels.

Specifically, the processor 230 may group the web-based channels in genres, group the web-based channels based on the number of subscribers of each channel, or group the web-based channels based on each user account and manage the grouped channels.

For example, the processor 230 may determine a genre of the web-based channel based on metadata corresponding to the web content provided by the web-based channel or information mapped to the web-based channel, and classify the web-based channels in different genres based on the determination. Also, in a case where web-based channel manufacturers provide genre information, the processor 230 may classify the web-based channels in different genres based on the provided genre information.

Furthermore, the processor 230 may determine the order of popularity of each channel based on information such as the number of channel subscribers, a user's preference interaction, and social networking service (SNS) shared information. Herein, the user's preference interaction may mean an interaction that the user displays for oneself regarding the corresponding channel or web content. The SNS shared information may be various types of information such as capturing the corresponding content screen and uploading the captured screen to an SNS server, writing a comment on an uploaded content clip, indicating preference by voting, and writing a real time comment in twitter and so forth.

Furthermore, the processor 230 may manage recommended channels based on various information such as a category (or genre), generation (or age), and gender of a channel that the user is already subscribed to, and provide the recommended channel information according to a request by the display apparatus 100.

Specifically, the processor 230 may group at least one category menu of a first channel category that provides channels based on popularity, a second channel category that provides channels based on the user account, and a third channel category that provides channels for each genre and channel information corresponding to each category menu and manage the same. Furthermore, the processor 230 may align the channels belonging to each category in an order of popularity (for example, the number of subscribers and links) and manage the same.

For example, in the case of the first channel category that provides channels based on the order of popularity, the processor 230 may align the channels according to the order of popularity computed based on the weekly or monthly number of subscribers and links regardless of genre.

Furthermore, in the case of the second channel category that provides channels based on the user account, the processor 230 may align the channels registered in the user account and the web contents provided in the channels and manage the same.

Furthermore, in the case of the third channel category that provides channels for each genre, the processor may classify the channels in various genres such as Comic, Sport, Shopping, Fashion, Music, IT, Game, Movie, Health, Education, etc., and may group and manage the channels belonging to each genre. In this case, as described above, the processor 230 may classify the genre of each channel based on the information mapped to the web-based channel or the metadata included in the web content being provided by the web-based channel.

Furthermore, the processor 230 may manage the recommended channels based on various information such as the category (or genre) of the channel that the user is already subscribed to, generation (or age), and gender.

Meanwhile, the display apparatus 100' may further include an image receiver that receives an image content (for example in the form of downloading or streaming) from various external sources (for example, an outside broadcasting station, DVD, set top box, and external server).

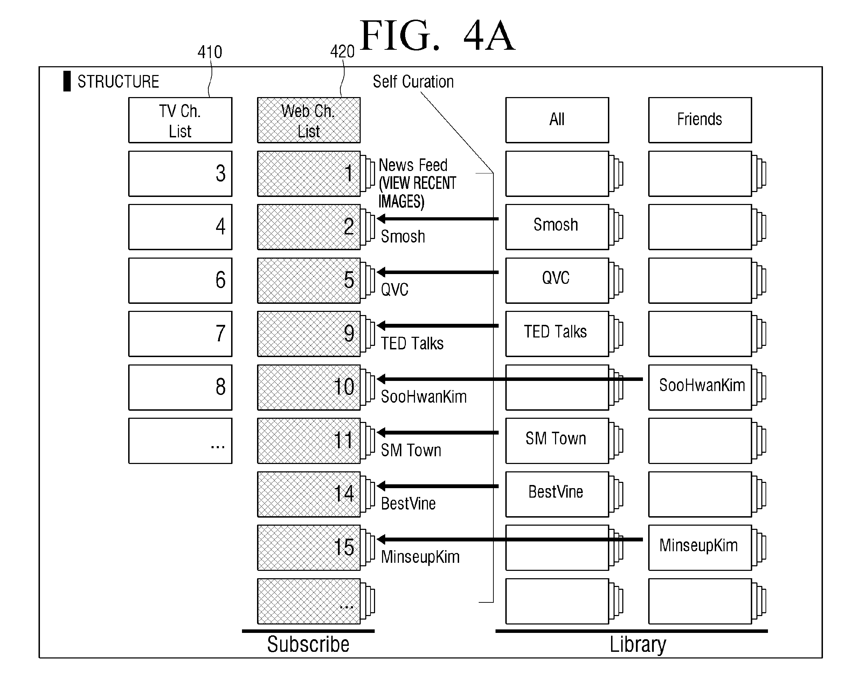

FIG. 4A is a view for explaining a structure of a virtual channel according to an exemplary embodiment.

As illustrated in FIG. 4A, the structure of a virtual channel according to an exemplary embodiment may include an existing (e.g., related art) TV channel list 410 and a web-based channel list 420. Herein, the TV channel list 410 includes channels provided from broadcast channel use operators (PP), data broadcast channel use operators (DP), and content providers (CP) including ground waves, and the web-based channel list 420 may include channels provided based on web-based content.

As illustrated, the TV channel list 410 and the web-based channel list 420 may be allocated such that channel numbers do not overlap with each other, and may have an equal channel relationship.

The channels included in the web-based channel list 420 may be included in the virtual channel list according to whether or not the user is subscribed thereto. That is, the user may select and subscribe to a web-based service channel, and the subscribed web-based service channel may be allocated to the user's channel list and be provided in an equal relationship with the broadcast channels. According to another exemplary embodiments, a plurality of channels may be included in the virtual channel list and distinguished (e.g., based on a color, a highlighting, etc.) based on whether the user is subscribed thereto.

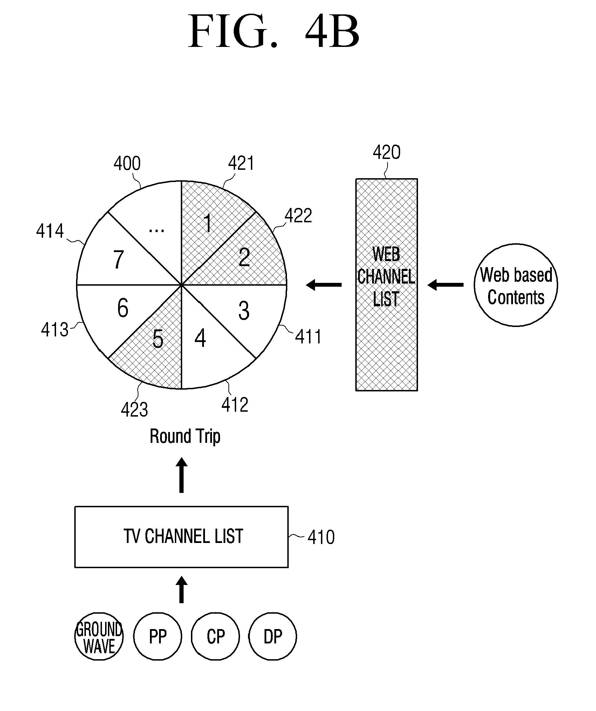

FIG. 4B is a view illustrating a configuration of a virtual channel list according to an exemplary embodiment.

As illustrated in FIG. 4B, the virtual channel list according to an exemplary embodiment may be a channel list 400 created or recreated based on a TV channel list 410 and a web-based channel list 420.

For example, as illustrated, the virtual channel list 400 may be in a format that includes existing broadcasting channels 411, 412, 413, 414 provided by the broadcast channel use operators (PP), data broadcast channel use operators (DP), and content providers (CP), and the web-based service based channels 421, 422, 423 provided based on the web-based contents.

Accordingly, in response to a channel zapping command being input, the existing broadcast channels 411, 412, 413, 414 and web-based service based channels 421, 422, 423 may be provided in the same channel format.

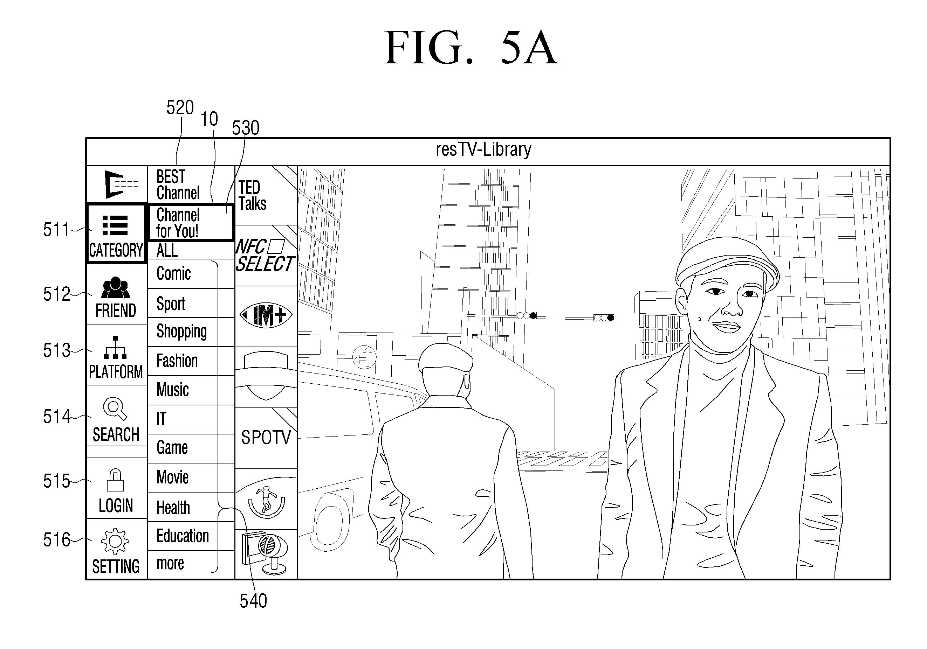

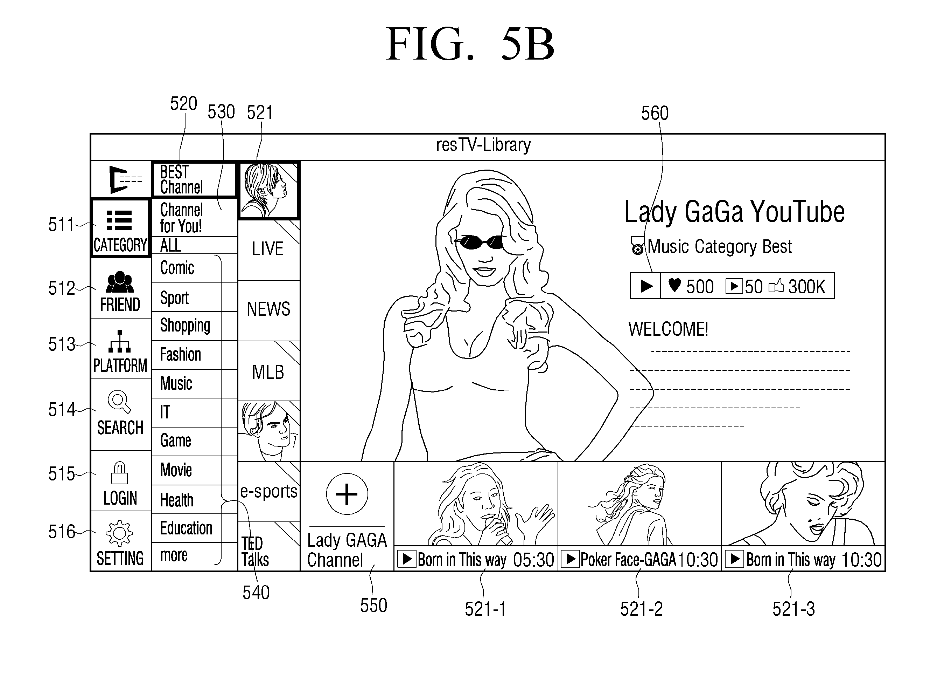

FIGs. 5A and 5B are views illustrating a configuration of a UI screen according to an exemplary embodiment.

FIG. 5A illustrates a UI screen that includes web-based service based channel information provided to create the virtual channel list according to an exemplary embodiment.

As illustrated, the UI may be provided such that channels are aligned based on category, channel popularity, number of subscribers, and recommended channels. Herein, in response to a log-in to a user account, the UI screen corresponding to the account may be provided.

Specifically, higher or upper menus of a CATEGORY 511, a FRIEND 512, a PLATFORM 513, a SEARCH 514, a LOGIN 515, and a SETTING 516 may be provided, and a sub menu that belongs to each higher menu may be provided. For example, in the case of the CATEGORY 511 menu, BEST Channel 520 that provides popular channel information, Channel for You 530 that provides information on channels registered in the user account, and menus 540 classified according to genre may be included in its sub menu. Moving from one item to another item may be made using a direction key of a remote control apparatus configured to manipulate movement of a selected GUI 10.

Meanwhile, in response to a UI screen such as that illustrated in FIG. 5A being provided according to a predetermined event, the user may subscribe to a channel and add the channel to the virtual channel list.

For example, in response to the BEST Channel 520 menu that provides popular channels such as that illustrated in FIG. 5B being selected, a list of popular channels may be provided. Herein, the popular channels may be determined based on various information from which the order of popularity such as the number of subscribers, the number of links, etc.

Furthermore, in response to a channel 521 being selected from the provided list of popular channels by a selecting GUI, for example a highlight (or cursor) 10, a web content list 521-1 to 521-3 provided from the channel may be provided in a thumbnail format. Furthermore, in response to the corresponding channel 521 being selected, various information 560 such as the number of contents provided in the channel 521, the number of subscribers to the channel, and the number of links may be provided together. Furthermore, the user may move the highlight 10 to select a web content on the web content list 521-1 to 521-3, and reproduce the web content in a previewing format.

Herein, the user may add the web-based channel 521 to his/her channel list through a channel adding menu 550 (for example, "+" icon). In this case, the user may set a channel number to the web-based channel being added.

For example, the user may log in to his/her account through the log-in menu 515 and subscribe to a channel and add the channel to his/her virtual channel list.

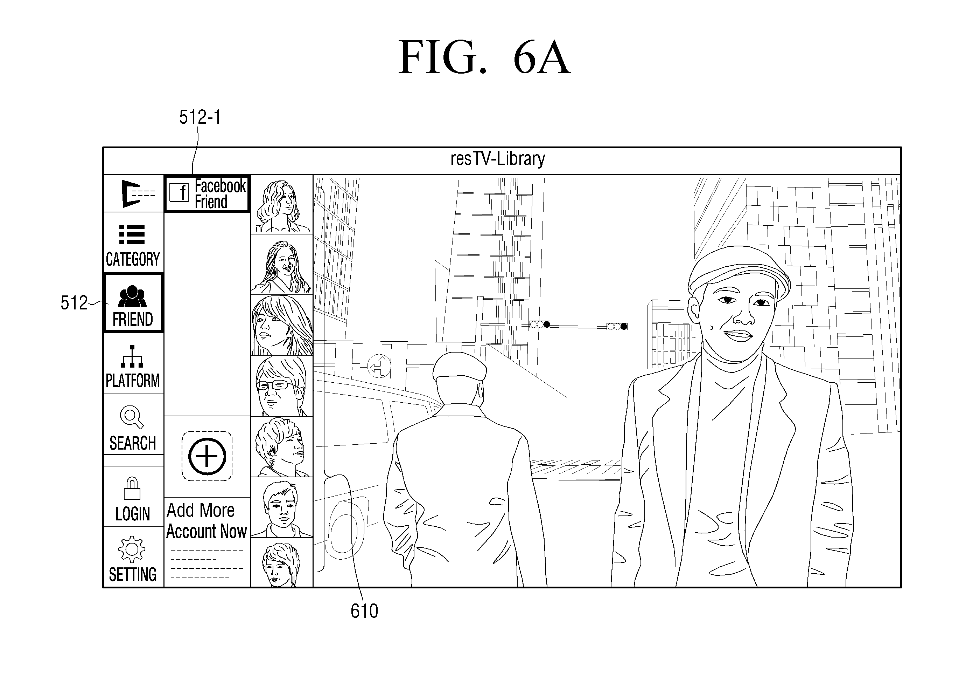

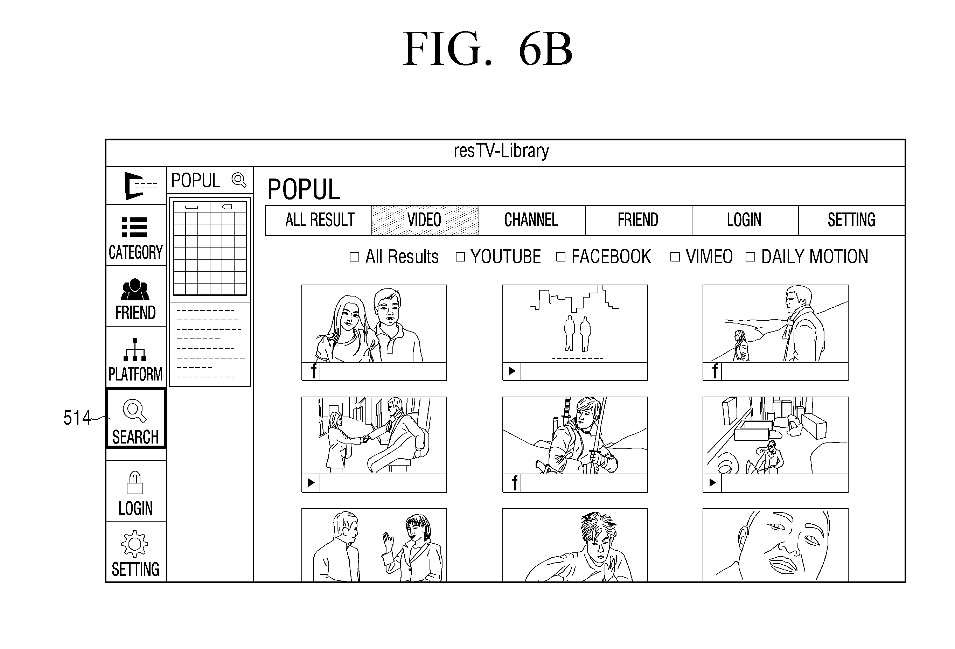

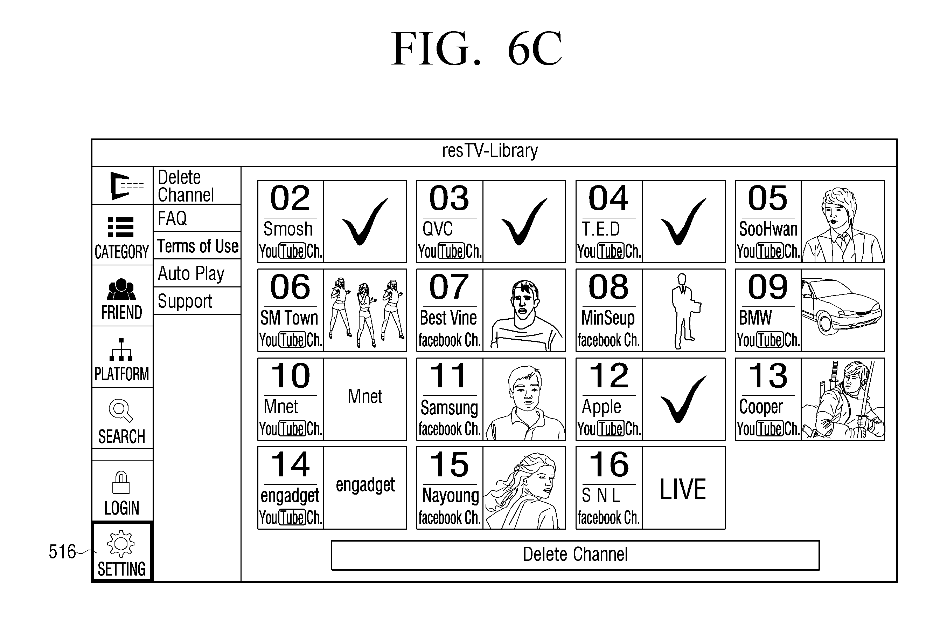

FIGs. 6A, 6B, and 6C are views illustrating a configuration of a UI screen according to another exemplary embodiment.

As illustrated in FIG. 6A, in response to a FRIEND menu 512 being selected, web channel information that provides SNS services, e.g., platform information of SNS providers, may be provided.

For example, as illustrated, a "Facebook friend" menu 512-1 may be provided as a sub menu of the FRIEND menu 512, and in response to the menu 512-1 being selected, a list of accounts of friends who are "Facebook friends" may be provided.

In this case, the user may add an account of a friend in the list of accounts of friends 610 to the web channel. That is, the account of the selected friend may be added as one web channel to the pre-stored virtual channel list.

Meanwhile, in response to the PLATFORM menu 513 being selected, information on the web channel that provides SNS services, e.g., platform information of the SNS providers, as wellas platform information of social media contents providers may be listed together and displayed.

As illustrated in FIG. 6A, in response to the SEARCH menu 514 being selected, a function of searching each web content of each platform may be provided.

For example, as illustrated, in response to a search word "POPUL" being input, a web content corresponding to that search word may be searched and provided.

In this case, in response to the user selecting a certain web content, the screen may be converted into a category-based UI screen such as that illustrated in FIG. 5B, so that the user may determine whether or not to subscribe to the selected web content.

Various services may be provided such that in response to the SETTING menu 516 being selected such as that illustrated in FIG. 6C, information on channels that the user is subscribed to so far may be displayed, and the user may terminate a channel subscription using a function of deleting channel information, or listing channels and contents in the order that the user wishes.

Furthermore, in response to the LOGIN menu 515 being selected and thus being logged in to the user account, a function of calling various information registered in the user account, for example each platform, that is, information on channels that the user is subscribed to and information on the web contents provided in each channel, may be executed.

According to various aforementioned exemplary embodiments, the user may arrange and edit the grouping contents in the channel order that the user wants, thereby resolving the inconvenience of having to convert the content that the user wants to view for each platform and to search the same.

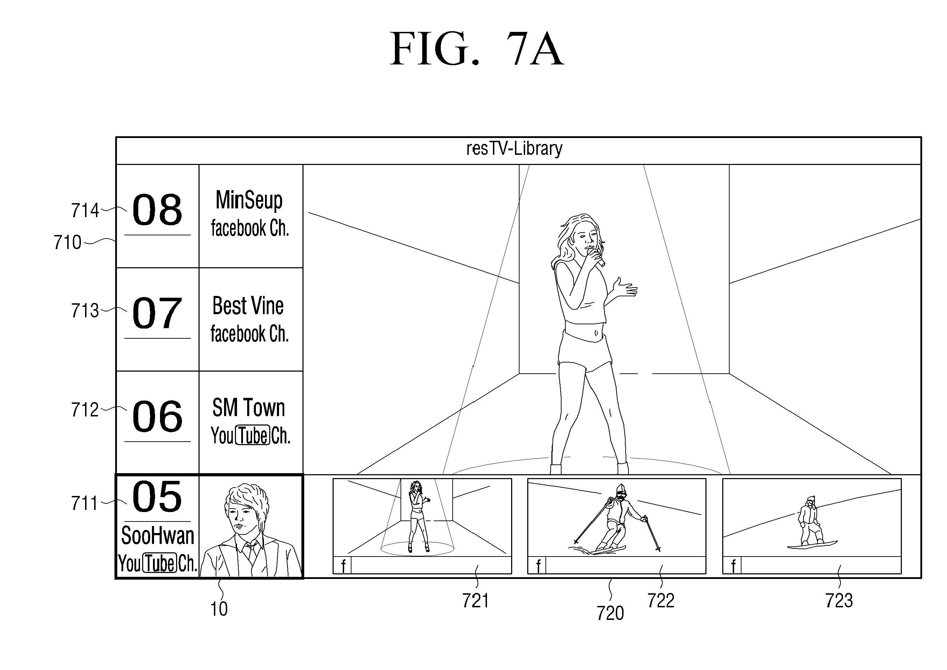

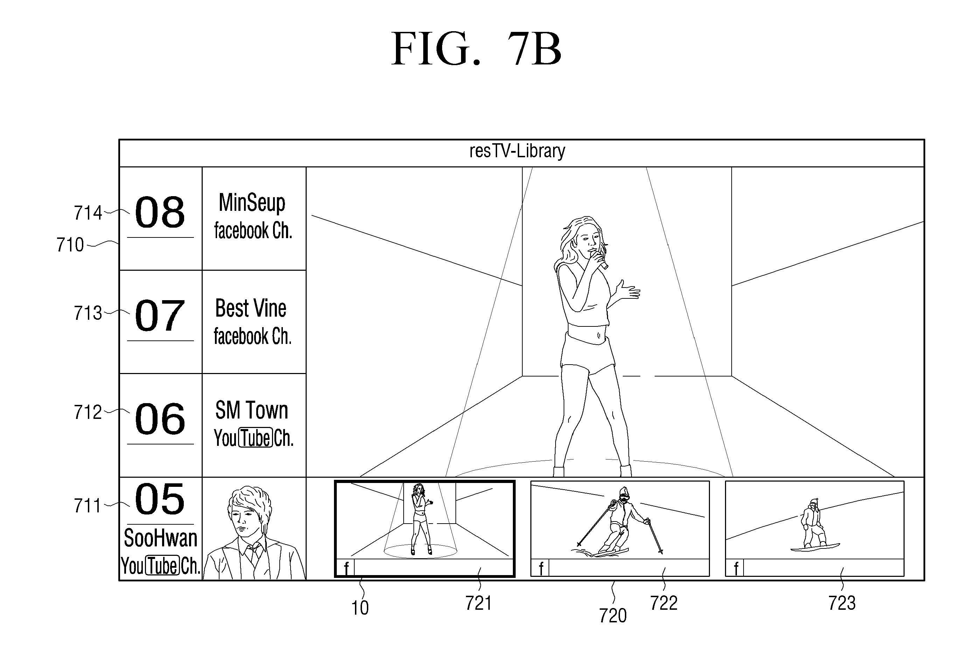

FIGs. 7A and 7B are views illustrating a configuration of a UI screen according to another exemplary embodiment.

The UI screen illustrated in FIG. 7A shows a state where the virtual channel list is displayed according to a user command for calling the virtual channel list.

As illustrated, the channel list 710 may be provided in a vertical direction on the left side of the UI screen, and the list of web contents 720 that may be provided in the channel selected by the highlight 10 may be provided in a horizontal direction on the bottom side of the UI screen. That is, the virtual channel list may be provided in an L bar format.

Meanwhile, in the channel list 710 provided in the vertical direction on the left side of the UI screen, the highlight 10 may be positioned in a fixed position, that is, on a bottom corner area on the left side of the screen, and the channel list 710 may be moved in a upper direction or a lower direction according to a user command, and be displayed. That is, number 6 channel 712 may be moved to a bottom corner area on the left side of the screen where the highlight 10 is positioned and be displayed, and other channels may be moved in a lower direction successively and be displayed.

Furthermore, as illustrated, in a case where number 5 channel 711 is selected, and the list of web contents being provided in the channel 711 is provided in a horizontal direction on the bottom side of the UI screen, the highlight 10 may be moved to the right side to select a web content that the user wants.

For example, as illustrated in FIG. 7B, the highlight 10 may be moved to the right side to select the web content 721, and in response to the corresponding web content 721 being selected, the corresponding web content 721 may automatically be reproduced. However, it is possible to configure such that the corresponding web content 721 is not automatically reproduced with the highlight 10 positioned in the web content 721, but is reproduced in response to a user's command to reproduce.

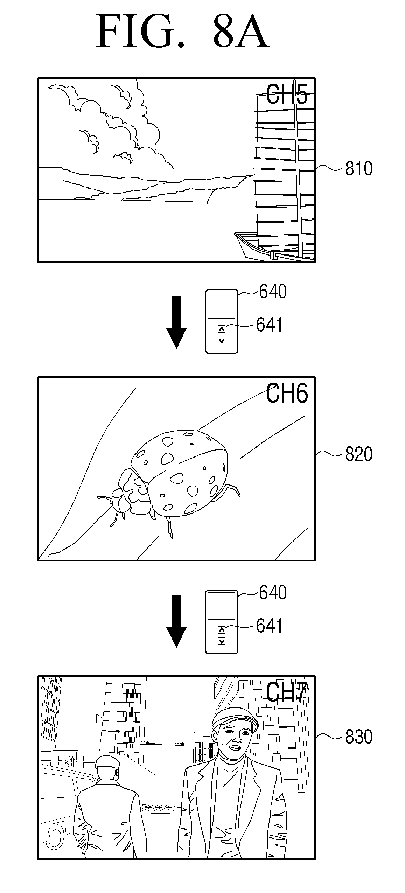

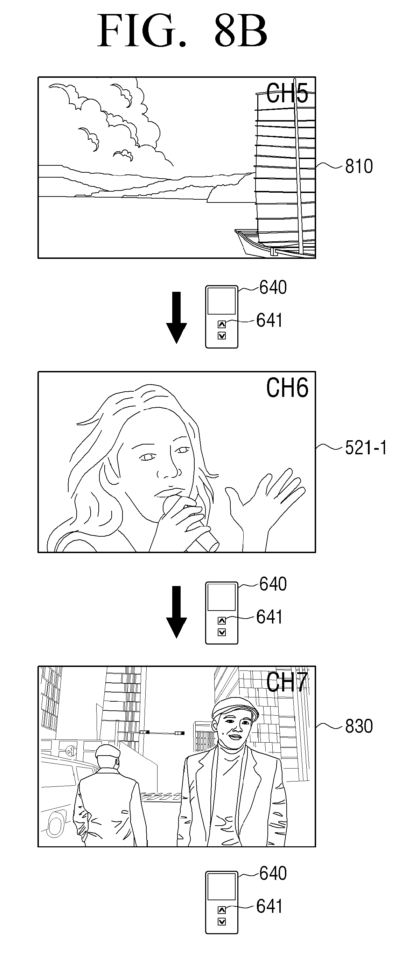

FIGs. 8A and 8B are views for explaining a zapping operation according to a channel zapping command according to an exemplary embodiment.

FIG. 8A shows the state of a screen provided according to channel zapping before a certain web-based service channel 521 is added to the virtual channel list, and FIG. 8B shows the state of a screen according to a channel zapping command after the certain web-based service channel 521 has been added to the virtual channel list in FIG. 5B.

As illustrated in FIG. 8A, before the certain web-based service channel 521 is added to the virtual channel list, screens 810, 820, 830 corresponding to each channel selected according a channel zapping command may be provided successively.

Meanwhile, in a case where the certain web-based service channel 521 is added as CH 6 to the virtual channel list in FIG. 5B, as illustrated in FIG. 8B, in response to CH 6 being zapped (e.g., selected, browsed, or surfed to) according to the channel zapping command, the certain web-based service channel 521 may be provided. That is, the web content 521-1 provided in the corresponding web-based service channel may be automatically reproduced.

That is, the user may perform editing on the channel list such as adding a new channel to the virtual channel list or deleting an existing channel from the virtual channel list, and depending on the edited state of the virtual channel list, the channel selected according to the channel zapping command may be changed and provided.

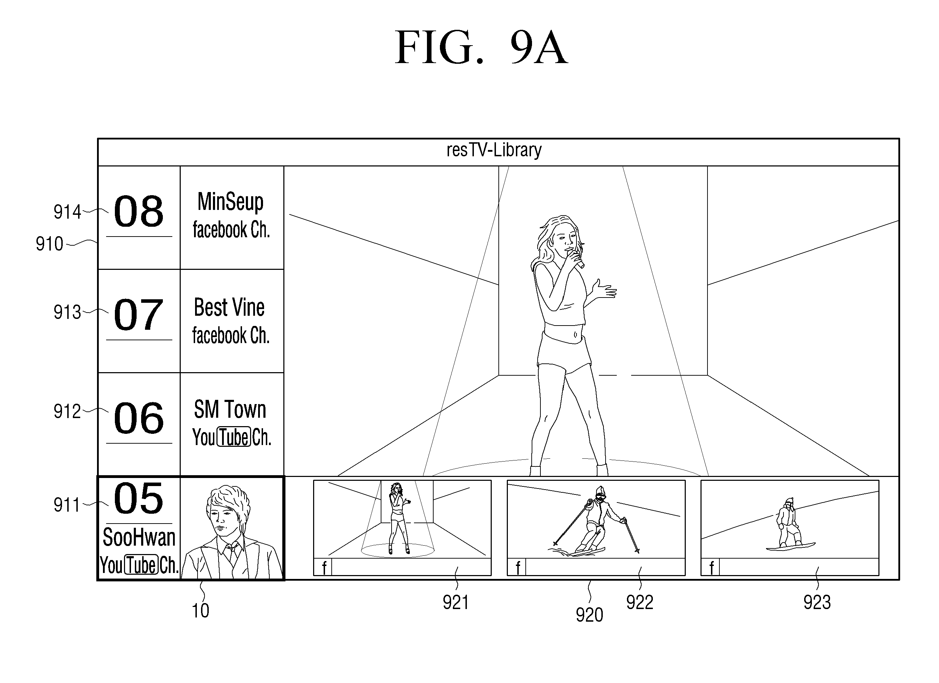

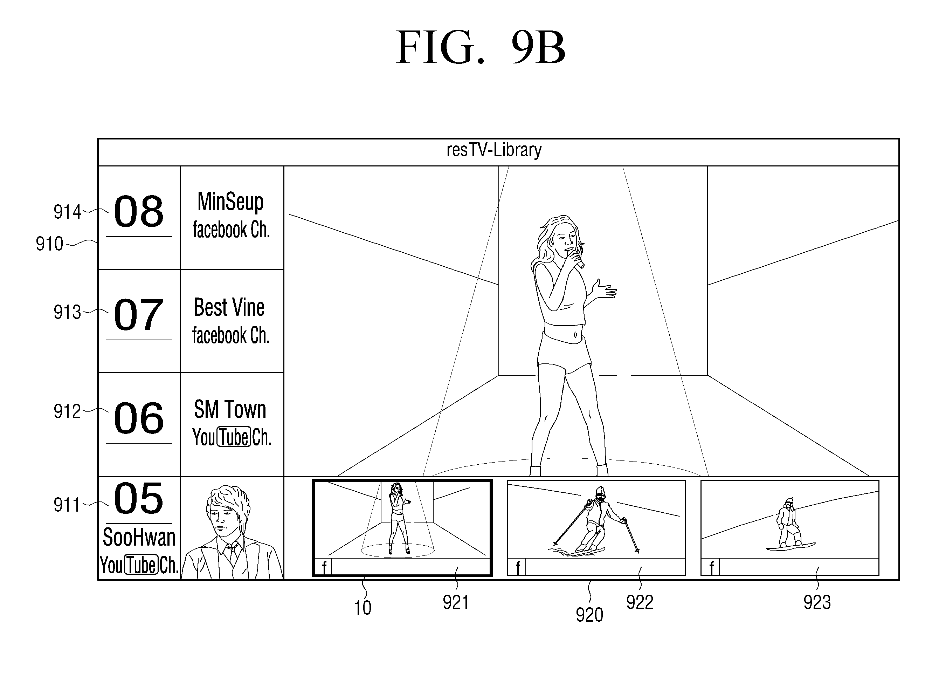

FIGs. 9A and 9B are views illustrating a configuration of a UI screen according to another exemplary embodiment.

The UI screen illustrated in FIG. 9A is in a state in which the virtual channel list is displayed according to a user command for calling the virtual channel list.

As illustrated, the channel list 910 may be provided in a vertical direction on a left side of the UI screen, and the list of web contents 920 that may be provided in the channel selected by the highlight 10 may be provided in a horizontal direction on a bottom side of the UI screen. That is, the virtual channel list may be provided in an L bar format.

Meanwhile, in the channel list 910 provided in the vertical direction on the left side of the UI screen, the highlight 10 may be positioned in a bottom corner area on a left side of the screen, and the channel list 910 may be moved in an upper direction or a lower direction according to a user command and be displayed. That is, number 6 channel 912 may be moved to the bottom corner area on the left side of the screen where the highlight 10 is currently positioned and be displayed, and the other channels may be moved in the lower direction successively and be displayed.

Furthermore, in a case where number 5 channel 911 is selected and the web content list 920 provided in the corresponding channel 911 is provided in a horizontal direction on the bottom side of the UI screen as illustrated, the position of the highlight 10 may be moved to the right side and a desired web content may be selected.

For example, as illustrated in FIG. 9B, the highlight 10 may be moved to the right side and the web content 921 may be selected, and in response to the corresponding web content 921 being selected, the corresponding web content 921 may be automatically reproduced. However, in some cases, it is possible to configure such that the corresponding web content 921 is not automatically reproduced. Rather, the web content 921 may be reproduced when, with the highlight 10 positioned in the web content 921, there is a command to reproduce by the user.

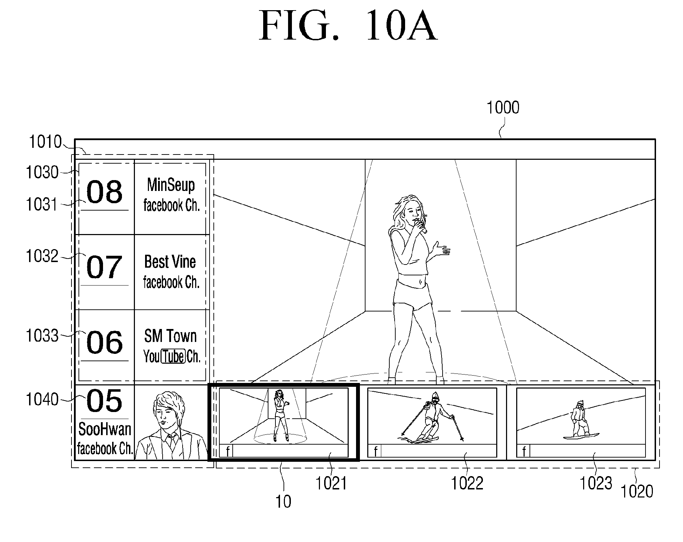

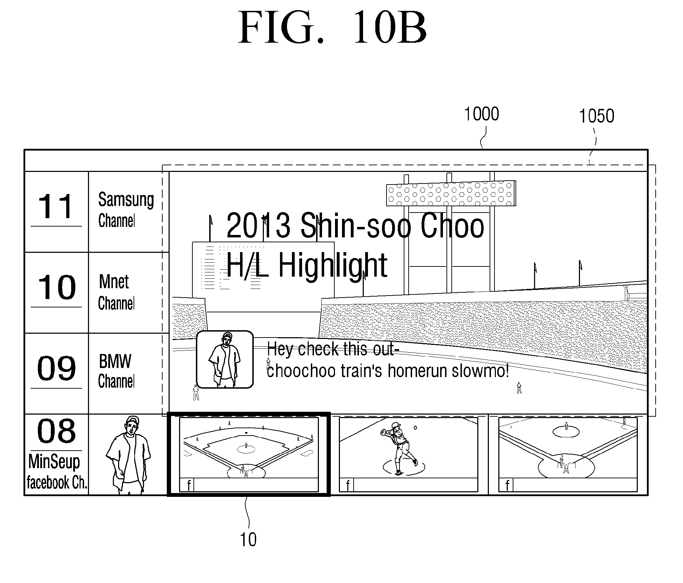

FIGs. 10A and 10B are views illustrating a configuration of a UI screen according to another exemplary embodiment.

As illustrated in FIG. 10A, the UI screen according to an exemplary embodiment may include a virtual channel list 1010, a web content list 1020, and a highlight for selecting a web content 10. Herein, the virtual channel list 1010 is displayed in a longitudinal axis on a left side of the screen, and the web content list 1020 is displayed in a lateral axis on a bottom side of the screen. However, it is understood that one or more other exemplary embodiments are not limited thereto. Furthermore, while the virtual channel list 1010 and web content list 1020 have rectangular shapes in the present exemplary embodiment, it is understood that one or more other exemplary embodiments are not limited thereto. For example, the virtual channel list 1010 and web content list 1020 may be configured to have a trapezoidal or three-dimensional shape.

The virtual channel list 1010 may be divided into unselected channels 1030 and selected channels 1040, and adjusting the channels may be performed through a button in a remote control apparatus or display apparatus 100.

The user may map a desired web-based service or an account to a desired channel, wherein the channel numbers may not be successive. For example, a first channel 1031 and a third channel 1033 may be mapped with a web-based service that the user desires, while a second channel 1032 is mapped with no web-based service. Furthermore, only the mapped channel numbers may be displayed on the channel list 1010, or all the unmapped channel numbers may be displayed on the channel list 1010.

A selected channel 1040 is a channel set according to a channel browsing command by the user on the virtual channel list 1010. In a case where a channel not mapped with the web-based service is also displayed on the channel list 1010, when that channel is selected, only the channel number may be displayed, and the web content list 1020 may not be displayed. In a case where the web-based service is mapped to the channel, the selected channel 1040 may display not only the channel number but also the web-based service and account and so forth.

In response to a channel being selected, when the web-based service is not mapped to that channel (e.g., in the case of a channel mapped to a TV broadcasting channel), nothing may be displayed on the web content list 1020 (or information regarding the channel, information indicating a source of the channel, etc., may be displayed). In a case where the web-based service is mapped to the channel, the web content provided in the corresponding web-based service may be displayed on the web content list 1020.

Meanwhile, as described above, the web-based service may be at least one of a social network service and a web content providing service, but it is understood that one or more other exemplary embodiments are not limited thereto.

The web content list 1020 may be provided in a recently updated order or an order of preference of the user. Herein, the first web content 1021, the second web content 1022, and the third web content 1023 may be displayed in an updated order from the left side, but it is understood that one or more other exemplary embodiments are not limited thereto. Furthermore, each web content of the first web content 1021, the second web content 1022, and the third web content 1023 may be displayed as at least one of a thumbnail image, reproducing time and web-based service.

In FIG. 10A, the UI screen that includes the channel list 1010 and the content list 1020 is semitransparent, but this is just an exemplary embodiment, and thus the UI screen may be configured in various formats in various other exemplary embodiments. For example, the UI screen may be displayed on an entirety of the screen, without being semitransparent, with a different size, etc.

Even when the virtual channel list is displayed for channel browsing, an existing (e.g., currently reproduced) web content may continue to be displayed. That is, the virtual channel list may be configured to minimize interrupting the user's viewing experience. In order to minimize interrupting the user's viewing experience, the virtual channel list may be configured to be semitransparent or to have a smaller size and then be displayed. Otherwise, the unselected channel 1030 may be displayed vividly while the selected channel 1040 is displayed vividly, or only the selected channel 1040 may be expanded while the unselected channel 1030 is displayed in a smaller size. Other web contents may be displayed in a similar manner.

The highlight 10 for selecting a web content displays outskirts of the web content in white, but it is understood that one or more other exemplary embodiments are not limited thereto. For example, the highlight 10 may be configured to reduce the transparency or increase the size of the thumbnail image of the web content. In the case of a web content displayed in a recently updated order, the user may move the highlight 10 and select a past-updated web content. The user may also move the highlight 10 to a channel area to select a channel.

Meanwhile, the highlight 10 for selecting a web content may be configured such that the highlight 10 is not displayed when the virtual channel list is displayed. Herein, a position of the highlight 10 that is not displayed may be stored before the virtual channel list was terminated, and by the user's manipulation, the highlight 10 may be displayed again.

Even when the highlight 10 is moved, if the user has not selected the web content where the highlight 10 is positioned, the web content is not displayed. However, in the case where the highlight 10 moves the channel list 1010, the web content corresponding to the selected channel 1040 is displayed on the web content list 1020.

Referring to FIG. 10B, in response to the highlight 10 being moved and a web content being selected, web content information is received based on URL information on the corresponding web content. The web content receiving time may be short or long, depending on the quality of the web content. In this case, it is possible to configure the display apparatus 100 such that detailed information of the web content is provided through a still screen for or more than a certain period of time. However, the user may change the setting such that the detailed information of the web content is not displayed.

Meanwhile, in response to the display apparatus 100 being configured such that the detailed information of the web content is not displayed, the web content that is previously or currently displayed may continue to be displayed during the web content receiving time, or the web content may be stopped or paused on the screen displayed at the point where the web content was selected, and the still screen may be displayed together with a loading display.

The area for displaying detailed information of the web content 1050 is displayed on an upper right side of the screen, but this is just an exemplary embodiment, it is understood that one or more other exemplary embodiments are not limited thereto. For example, the area for displaying detailed information of the web content 1050 may be displayed on an entirety of the screen as the virtual channel list display mode is terminated, or may be displayed without a background screen.

The area for displaying detailed information of the web content 1050 may be configured to include at least one of a title, a reproducing time, a web content source, summary information, etc. The detailed information on the web content may be received from the server 200 at the same time as the web content is selected and then displayed, or the detailed information on the web content may be stored together with a pre-stored thumbnail from before the web content was selected.

The detailed information on the web content may be provided by a provider of the corresponding web-based service, by a manager of a certain account of the web-based service, or by a third party source. However, when there is no detailed information on the web content, a web content title or tag information stored in the web content itself may be displayed.

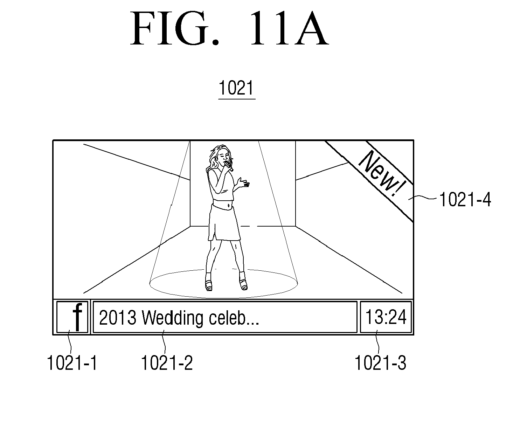

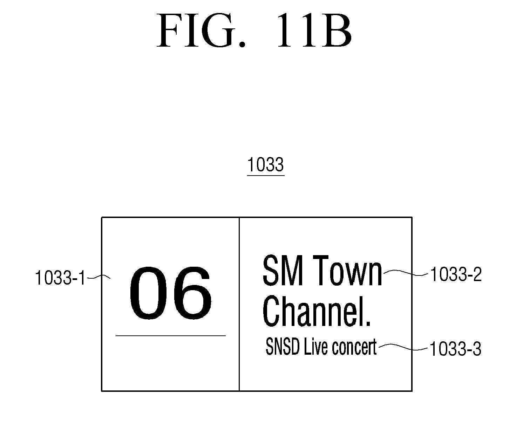

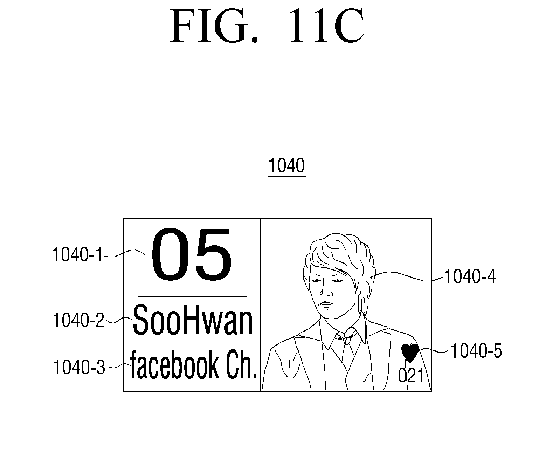

FIGs. 11A, 11B and 11C are views for explaining a state of display of a web content and web-based service channel according to an exemplary embodiment.

Referring to FIG. 11A, a first web content 1021 may include a thumbnail and at least one of a web content source 1021-1, a web content title 1021-2, a reproducing time 1021-3, and summary information on a web content thumbnail. However, the user may change the setting to not display the detailed information of the web content.

The web content source 1021-1 represents the web-based service, and if there is a certain trademark for the web-based service, the trademark may be displayed as the content source 1021-1. The title of the web-based service may be configured such that, if there is no certain trademark, the title is displayed in a small size or only a portion of the title is shown as it moves.

The web content title 1021-2 represents a title of the web content. The web content title 1021-2 may be configured such that, if there is no web content title, the web content title 1021-2 is not displayed or tag information of the web content or a portion of summary information is shown.

The reproducing time 1021-3 represents a total time of the web content, which may be displayed in hours, minutes, and seconds, although this is just an exemplary embodiment and it is understood that one or more other exemplary embodiments are not limited thereto.

The detailed information of the web content list 1020 is displayed on the bottom part of the web content thumbnail, but this is just an exemplary embodiment, and it is understood that one or more other exemplary embodiments are not limited thereto. For example, the detailed information of the web content list 1020 may be displayed on an upper side, a left side, or a right side, and may be semitransparent and have various sizes. The user may change the setting to not display the detailed information of the web content list 1020.

In a case where the web content list 1020 is displayed in an updated order, a recent web content may be notified to the user through a "New" indication 1021-4, and the "New" indication 1021-4 may not be displayed even though the web content is a recent web content if the user already selected and displayed the web content. It is understood that the "New" indication is just an exemplary embodiment, and one or more other exemplary embodiments are not limited thereto. For example, the web content list 1020 may be displayed in other words or pictures.

The web content source 1021-1, the web content title 1021-2, the reproducing time 1021-3, and the summary information on the web content thumbnail may be displayed with less transparency than the thumbnail of the web content list 1020 so that the user may recognize it easily.

As illustrated in FIG. 11B, of the unselected channels 1030, the third channel 1033 may include a channel number 1033-1, a title of the web-based service mapped to the channel 1033-2, and summary information of the web-based service 1033-3.

The channel number 1033-1 may be displayed even if there is no web-based service mapped to the channel. The title of the web-based service 1033-2 and the channel summary information 1033-3 may not be displayed if there is no web-based service mapped to the channel, and the third channel 1033 that is not highlighted 10 may be displayed semi-transparently overall. This may be applied to the first channel 1021 and second channel 1022 as well.

The unselected channel 1030 is displayed transparently overall or in a small size, but the channel number 1033-1 may be displayed with less transparency or in a bigger size than other detailed information so that the user may recognize it easily.

An unselected channel 1030 to which the web-based service is not mapped may not be displayed. However, this is just an exemplary embodiment, and it is understood that one or more other exemplary embodiments are not limited thereto. For example, even if the unselected channel 1030 is displayed, since there is no web-based service, only the channel number 1033-1 may be displayed, and the web content list 1020 may not be displayed.

As illustrated in FIG. 11C, the selected channel 1040 may include the channel number 1040-1, the title and account of the web-based service mapped to the channel 1040-2 and 1040-3, profile information 1040-4, and the number of subscribers 1040-5.

The channel number 1040-1 of the selected channel 1040 may be displayed in a similar manner as the channel number 1033-1 of the unselected channel 1030, but if there is too much information to display on the selected channel 1040, its size may be smaller. Furthermore, the channel number 1040-1 of the selected channel 1040 may be displayed more vividly than the channel number 1033-1 of the unselected channel 1030. The channel number 1040-1 of the selected channel 1040 may be displayed even if there is no web-based service mapped to the channel.

The title 1040-3, account 1040-2, and profile information 1040-4 of the web-based service may not be displayed if there is no web-based service mapped to the channel. Furthermore, the account 1040-2 and profile information 1040-4 may not be displayed if a certain account 1040-2 is not set even if there is a web-based service mapped to the channel. The profile information 1040-4 may not be displayed even if a certain account 1040-2 is set if a manager of the certain account 1040-2 did not input the profile information 1040-4. However, this is just an exemplary embodiment, and it is understood that one or more other exemplary embodiments are not limited thereto. For example, there may be cases where it is not possible to set an account 1040-2 to the web-based service. The profile information 1040-4 may be displayed as a photo or a phrase for indicating the certain account 1040-2.

The number of subscribers 1040-5 may represent the number of people who selected and displayed the web-based service or the web content of the account 1040-2, may represent a number of likes or recommendations for the web-based service or the web content, or may represent the number of mappings made to the web-based service or the account 1040-2 itself. However, it is understood that one or more other exemplary embodiments are not limited thereto.

The selected channel 1040 may be displayed more vividly overall than the unselected channel 1030 or in a bigger size than the unselected channel 1030 so that the user may recognize it easily. This will be explained in more detail hereinafter.

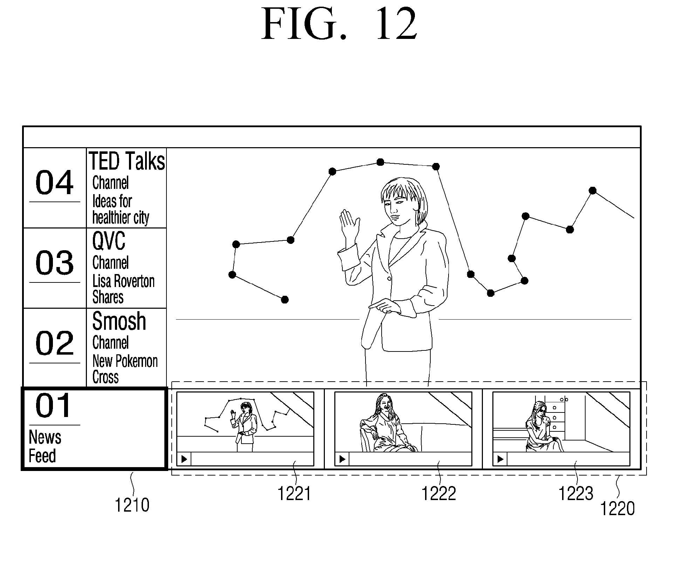

FIG. 12 is a view for explaining a channel that shows web contents of all channels according to an exemplary embodiment.

The channel that shows web contents of all channels 1210 may be referred to as a news feed. Although one or more other exemplary embodiments are not limited thereto, hereinafter, the channel will be referred to as the news feed channel 1210 for convenience of explanation.

The news feed channel 1210 may display the web contents being provided in all web-based services mapped to channels on the web content list 1220. For example, a first web content 1221 may be the web content of number 05 channel, a second web content 1222 may be the web content of number 09 channel, and a third web content 1223 may be the web content of number 02 channel.

The web contents may be displayed in an updated order, or in the order of user preference. Herein, the first web content 1221, the second web content 1222, and the third web content 1223 may be in the updated order from left to right. In a case where the news feed channel 1210 displays the web contents in an updated order, the display apparatus 100 may align the web contents of each channel to which the web-based service is mapped in an updated order with information on recent web contents received and display the same. However, it is understood that one or more other exemplary embodiments are not limited thereto.

The channel number of the news feed channel 1210 may be set in the display apparatus 100 as a first channel. However, it is understood that one or more other exemplary embodiments are not limited thereto. Furthermore, the user may change the channel number of the news feed channel 1210 to a desired channel number.

The web contents of the news feed channel 1210 may be provided for the web contents of all channels to which the web-based service is mapped according to a predetermined method or order, but the setting may be changed such that only the web contents of the channel (or group of channels) that the user desires is provided in the predetermined method.

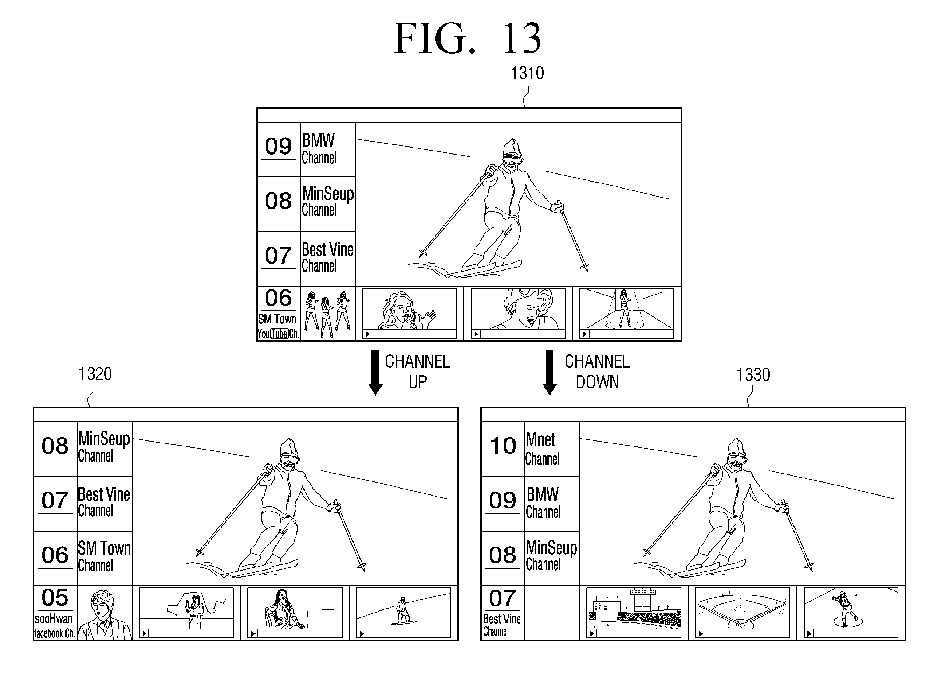

FIG. 13 is a view for explaining a channel browsing operation on a UI screen that includes a virtual channel list according to an exemplary embodiment.

Referring to FIG. 13, a channel on the channel list 1010 may be moved in a predetermined direction according to a channel browsing command by the user, and be arranged on a predetermined area. That is, the channel list 1010 may be moved in an upper direction by a channel down button input manipulation, and the channel list 1010 may be moved in a lower direction by a channel up button input manipulation to change the channel.

On the initial screen 1310, only channels 06, 07, 08, 09 are displayed on the channel list 1010, but it is understood that one or more other exemplary embodiments are not limited thereto. For example, more or fewer channels may be shown according to a setting. Furthermore, the channel numbers may be shown in three digits instead of two digits.

On a channel down screen 1320, only channels 05, 06, 07, 08 are displayed on the channel list 1010, as there is movement of a channel position, which may be a result of a channel down button input made by the user. The selected channel 1040 has been changed from channel 06 to channel 05, and the web content list 1020 is still on the bottom side of the screen, and only the channel list may be changed. However, the web content list 1020 is changed to the web content list 1020 for channel 05. Likewise, there may be movement of position of the channel list to the channel up screen 1330.

However, the highlight 10 may be configured to move itself. In the case where the highlight 10 itself moves, the web content list 1020 may be configured to move from the bottom of the screen in an upper direction as the channel moves. Herein, the channel list 1010 is fixed on the screen. However, it is understood that one or more other exemplary embodiments are not limited thereto.

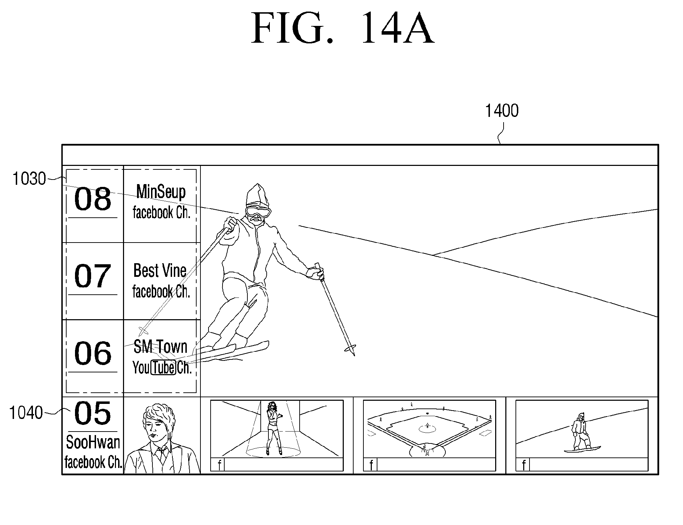

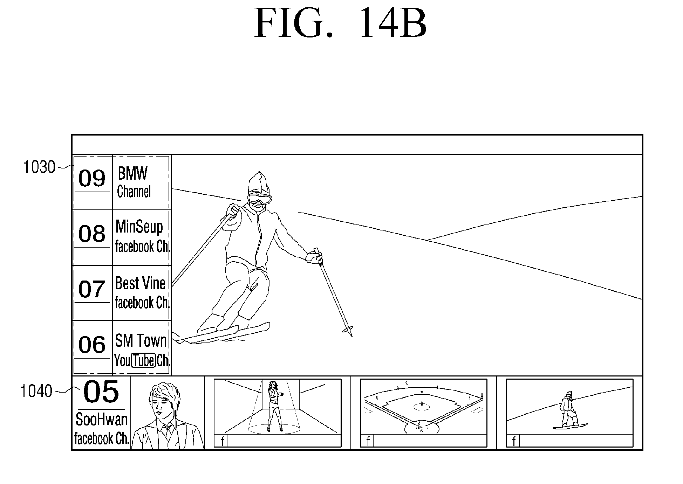

FIGs. 14A and 14B are views illustrating a UI screen that includes a virtual channel list according to another exemplary embodiment.

Referring to FIG. 14A, the unselected channel 1030 and the selected channel 1040 may be set to have different transparencies in the channel list 1010. For example, the unselected channel 1030 may be set to be more transparent than the selected channel 1040, so as to minimize interruption of the user's viewing.

Referring to FIG. 14B, the unselected channel 1030 and the selected channel 1040 may be set to have different sizes in the channel list 1010. For example, the unselected channel 1030 may be set to be smaller than the selected channel 1040, so as to minimize interruption of the user's viewing.

Furthermore, the display apparatus may be configured such that a channel is moved by a user's up/down button manipulation without displaying the unselected channel 230. In this case, since the unselected channel 1030 is not displayed, interruption of the user's viewing is minimized. Such a configuration may be, without limitation, applied to the web content list 1020 as well.

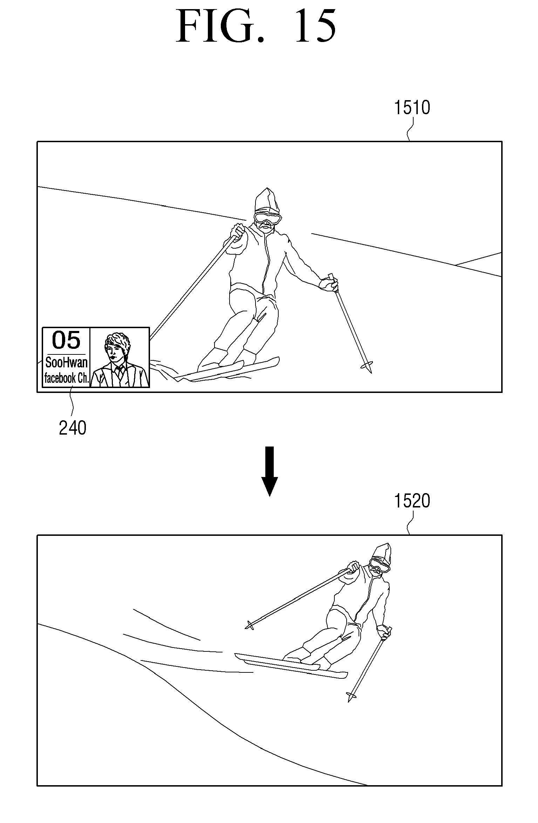

FIG. 15 is a view illustrating a UI screen according to another exemplary embodiment.

As illustrated in the upper part of FIG. 15, the screen where the web-based service is displayed 1510 displays the web-based service on a bottom left side of the screen, wherein the web-based service may be displayed identically as or differently from the selected channel 1040 of the channel list 1010 when entered into the UI screen that includes the virtual channel list.

The screen where the web-based service is not displayed 1520 illustrated in the bottom part of FIG. 15 is a screen from which the web-based service disappears. For example, the display apparatus may be configured such that the web-based service disappears a predetermined time period (e.g., three seconds) after the web-based service is displayed, although it is understood that one or more other exemplary embodiments are not limited thereto. The web-based service may be configured to disappear suddenly, or to disappear while gradually increasing the transparency, although it is understood that one or more other exemplary embodiments are not limited thereto. Even when the web-based service is displayed or disappears, the web content that is previously displayed continues to be displayed.

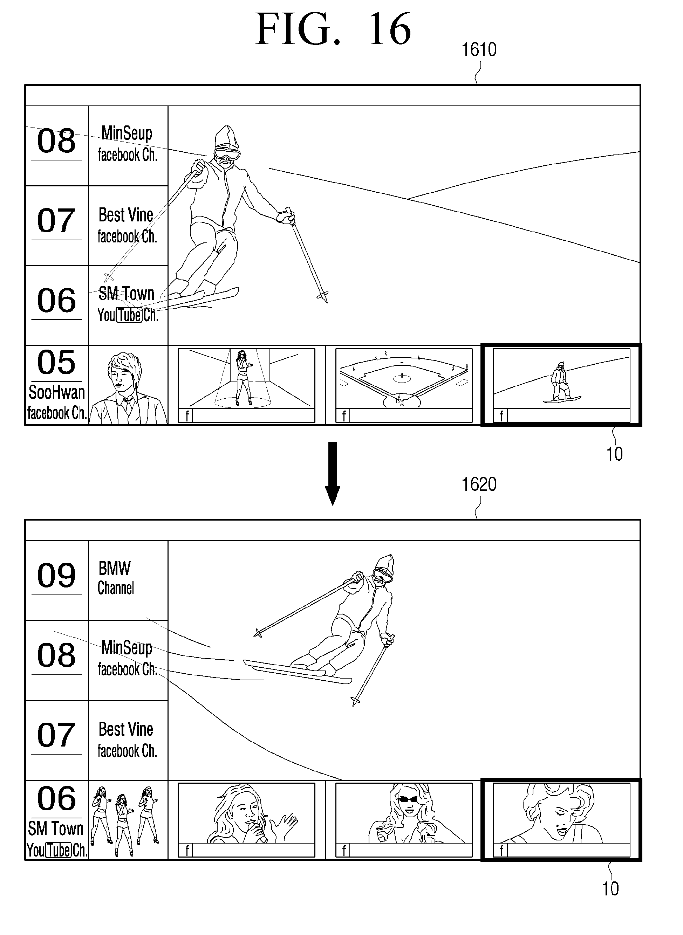

FIG. 16 is a view illustrating a UI screen according to another exemplary embodiment.

As illustrated in the upper part of FIG. 16, the screen 1610 for before the highlight 10 of the channel or web content is changed is a screen for before a user manipulation is made after the UI screen including the virtual channel list is displayed. Then, in response to the highlight 10 of the channel or web content being changed by the user's manipulation, a screen 1620 for after the highlight 10 of the channel or web content is changed may be seen as illustrated on the bottom part of FIG. 16, wherein if the user has not selected the web content yet, the web content being displayed may continue to be displayed.

In this case, the web content being displayed stops being displayed when the user selects another web content or cuts off a power supply. However, the web content may continue to be displayed even after the user terminates the UI screen that includes the virtual channel list.

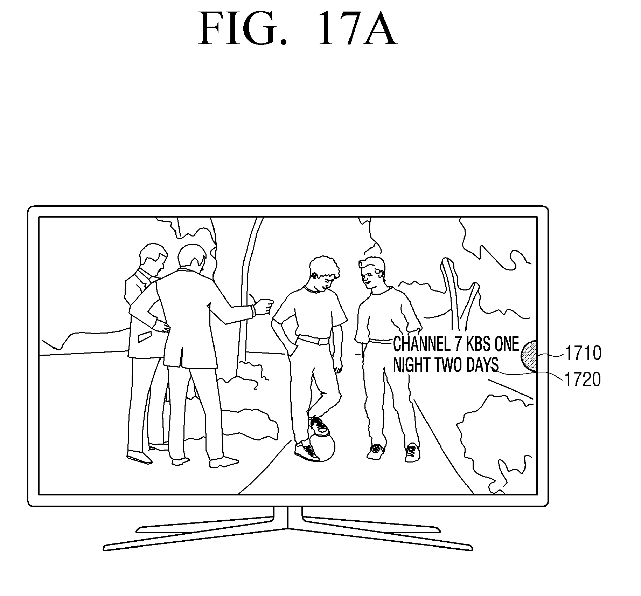

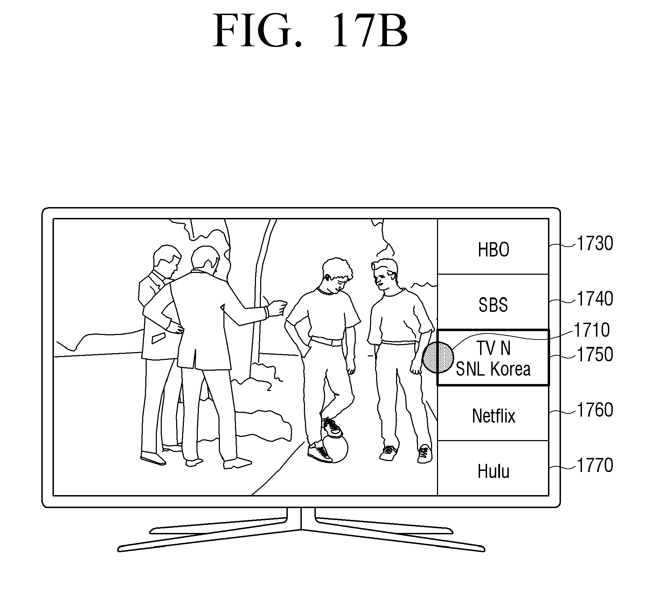

FIGs. 17A to 22F are views illustrating a UI screen that provides a GUI that may be converted into various formats according to another exemplary embodiment.

According to an exemplary embodiment, as illustrated in FIG. 17A, in response to a first predetermined user command being input after an image content is displayed, a semicircular GUI 1710 that guides (e.g., informs or indicates) that the mode of the display apparatus 100 is a first mode may be displayed on one area of the display screen. Herein, the predetermined first user command may be, without limitation, by way of example, a command for moving a remote control apparatus configured as a pointing device by a predetermined distance, a command for inputting a predetermined button in a remote control apparatus configured as a remote control, or a command for inputting a touch drag manipulation by a predetermined distance in a remote control apparatus having a touch pad. Meanwhile, on one side of the semicircular GUI 310 that guides that the mode of the display apparatus is the first mode, information on the currently displayed image content (for example, 'KBS, channel 7, one night two days') may be displayed.

Then, in response to a predetermined second user command being input, the semicircular GUI 1710 changes from the semicircular shape to a circular shape as the GUI 1710 moves to the left side, and guides that the mode of the display apparatus 100 is a second mode, and the content list 1730 to 1770 may be displayed. Herein, the predetermined second user command may be input in a different format from the first user command, for example, as, without limitation, a command for moving the pointing device by a distance different from that in the first user command, a command for inputting the predetermined button twice in a row in a remote control apparatus, and a command for inputting a touch drag manipulation by a length different from that in the first user command in the touch pad. Meanwhile, in the content list, a ground wave channel, a cable channel, a predetermined user preference channel, an Over The Top (OTT) channel, a social channel, a VOD service channel, a web service channel, and the like may be included.

In some cases, the command for converting the mode of the display apparatus 100 from the first mode to the second mode may be a command for moving the semicircular GUI 310 illustrated in FIG. 17A in a predetermined direction, for example, in a left direction (using a direction key (up/down/left/right) provided in the remote control apparatus). In this case, in response to a command for moving the semicircular GUI 310 in the opposite direction, for example, in a right direction, the mode of the display apparatus 100 may be converted from the second mode to the first mode.

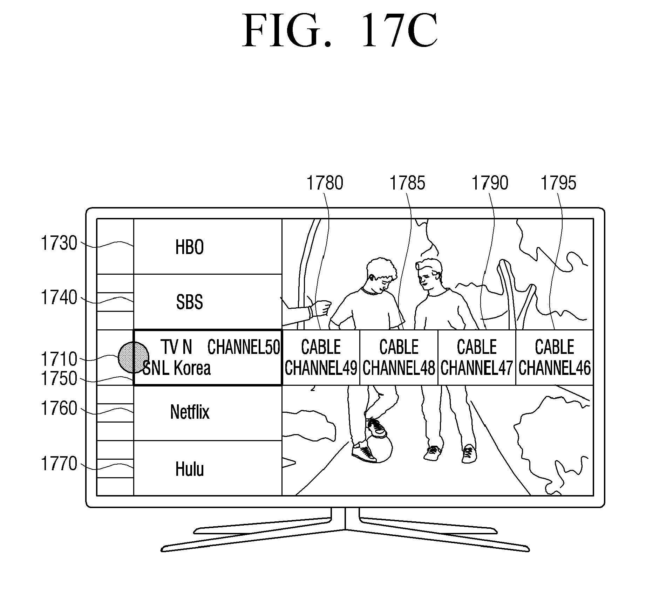

Meanwhile, in response to a certain content 'SNL Korea (1750) on TVN' being selected from the content list 1730 to 1770 and the predetermined second user command being input again, the position of the circular GUI that includes the content list 1730 to 1770 may be moved to the left end of the screen and guide that the mode of the display apparatus 200 is a third mode. In this case, as illustrated in FIG. 17C, a library list 1780 to 1795 that includes cable channel 49 to cable channel 46, 1780 to 1795, that is related contents of the selected content 'SNL Korea (1750) on TVN' may be displayed.

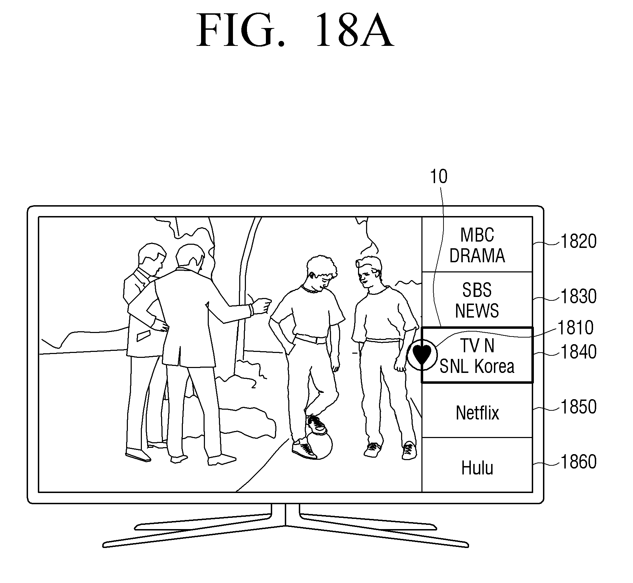

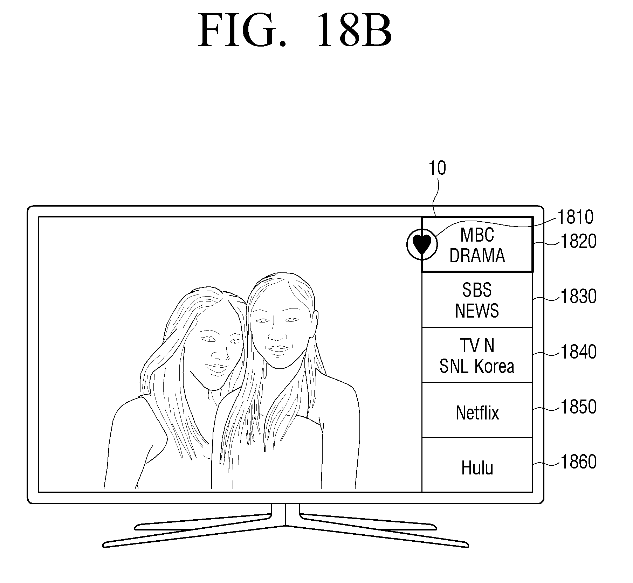

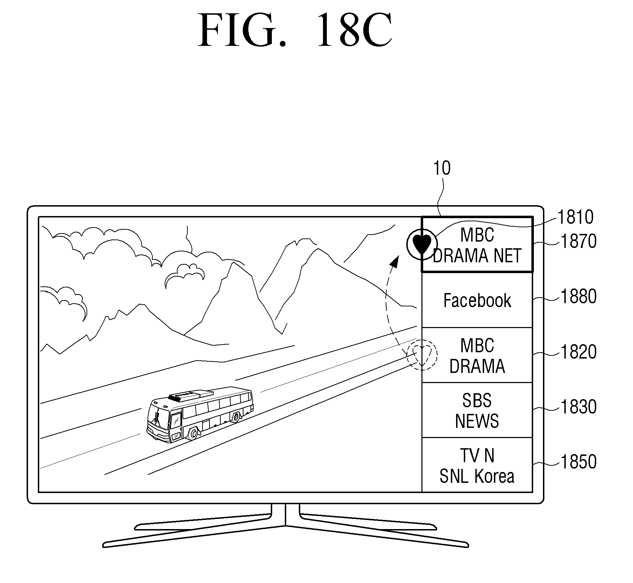

In another example, in response to a user command for moving the highlight 10 on the content list being input with a GUI 1810 that includes a 'heart shaped' icon representing the drama genre provided as illustrated in FIG. 18A, the highlight 10 may be moved to 'MBC drama (1820)' that is a content corresponding to the drama genre in the content list 1820 to 1860 as illustrated in FIG. 18B. Furthermore, as illustrated in FIG. 18C, the highlight 10 as well as the corresponding GUI 1810 may be moved.

Then, as illustrated in FIG. 18C, according to a user command for moving the highlight 10 to another content, the highlight 10 may be moved to 'MBC drama net (1870)' corresponding to the drama genre, and the corresponding GUI 1810 may be moved near the 'MBC drama net (1870)' and display the same.

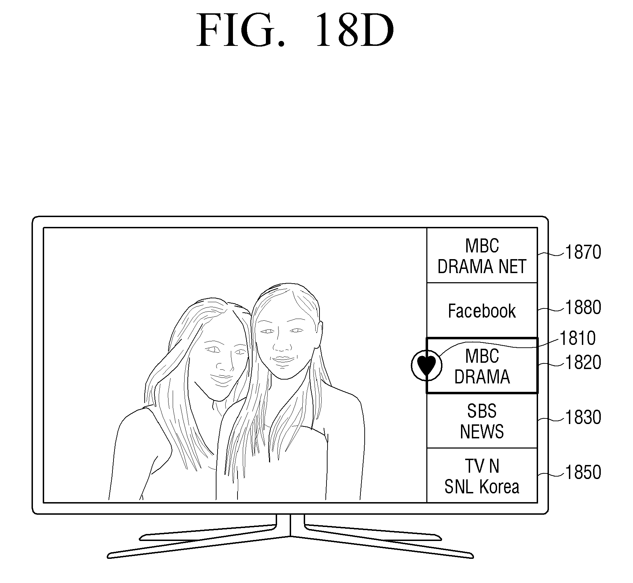

In some cases, without moving the position of the corresponding icon 1810, the position of 'MBC drama (1820)' corresponding to the contents of the drama genre may be moved to a position where the corresponding icon 1810 is displayed in the content list 1820 to 1860 as illustrated in FIG. 18D.

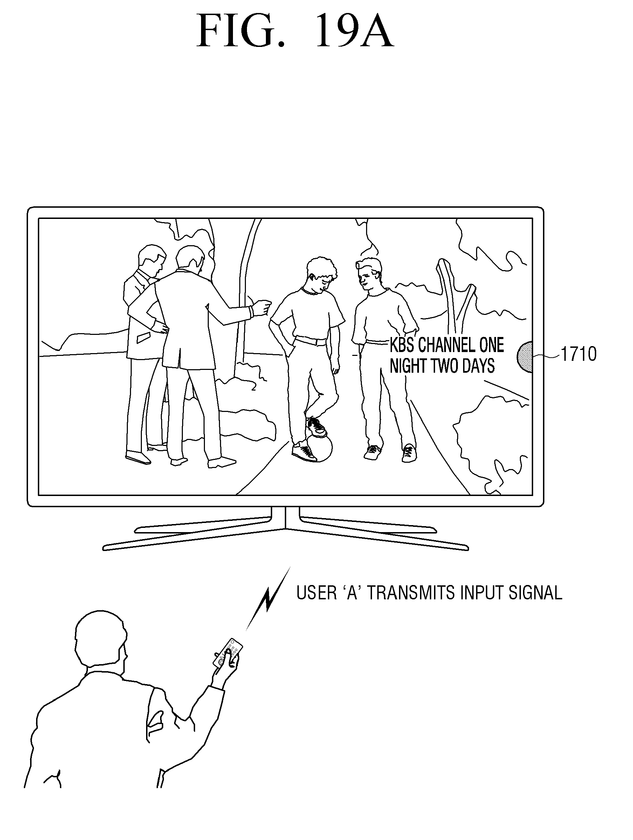

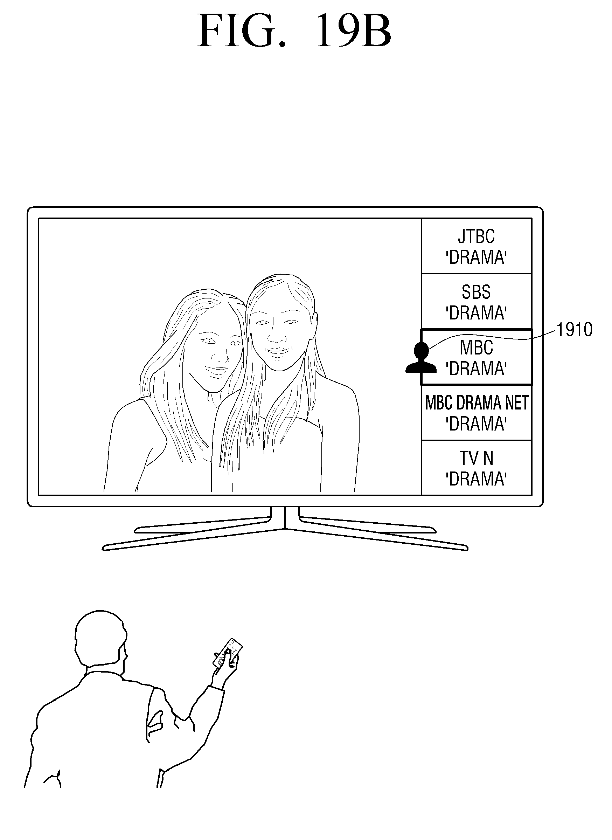

Furthermore, in another example, as illustrated in FIG. 19A, in response to a first user command corresponding to a certain user, that is 'A user', being input, contents may be classified using information related to the pre-stored A user (for example, information on the dramas that 'A user' prefers). Then, in response to a second user command of 'A user' being input, at least one of the position and the shape of the GUI 1710 may be changed to guide that the mode of the display apparatus 100 is the second mode, and as illustrated in FIG. 19B, a list of drama contents that 'A user' prefers may be displayed together with image contents. In this case, the GUI may be changed using the information on the dramas that 'A user' prefers (for example, 'heard icon' corresponding to the drama contents), and as illustrated in FIG. 19B, the shape of the GUI 1710 may be changed to a human-shaped GUI 1910 using information predetermined by 'A user.'

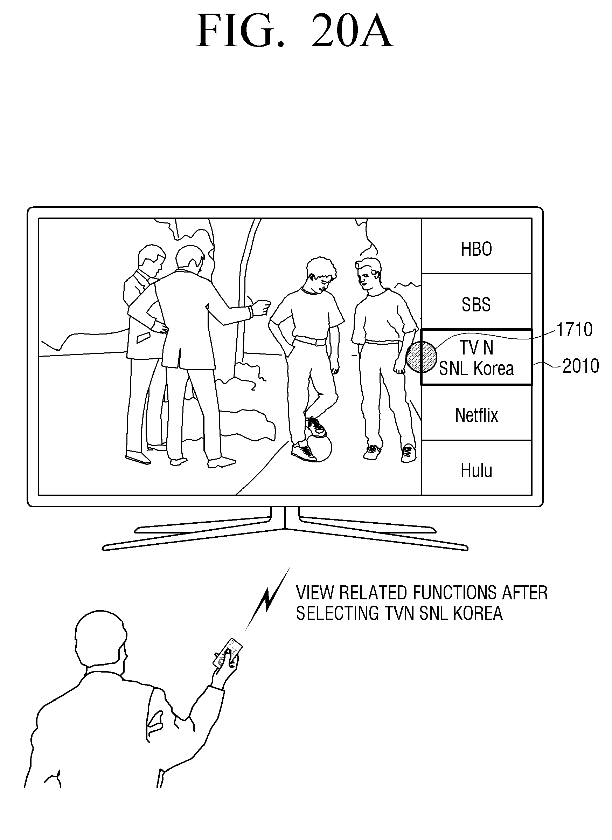

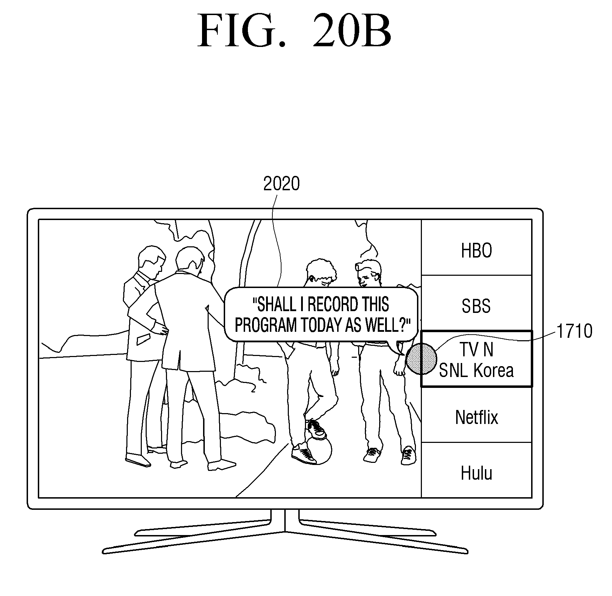

In another example, as illustrated in FIG. 20A, in response to a certain content, that is 'SNL Korea on TVN' content 2010, being selected in the second mode of the display apparatus 200 wherein a content list is displayed together with image contents, and a command for viewing functions related thereto being input, as illustrated in FIG. 20B, on one side of the 'SNL Korea on TVN' content 2010, a guide UI 1220 that includes a message that reads 'Shall I record this program today as well?' may be displayed.

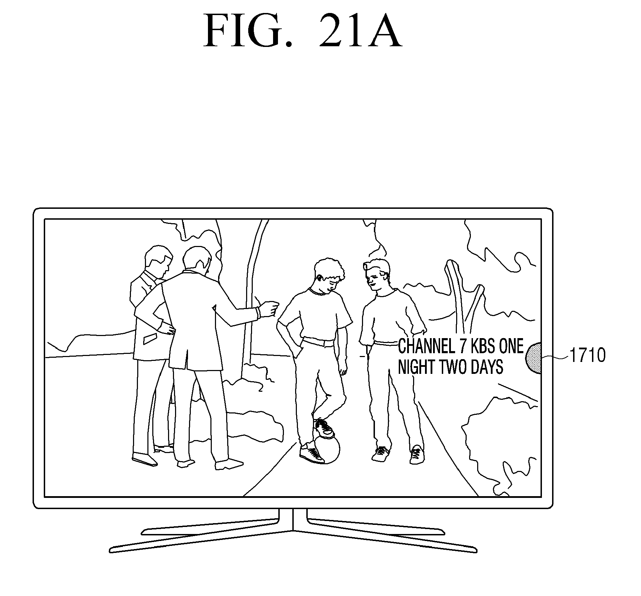

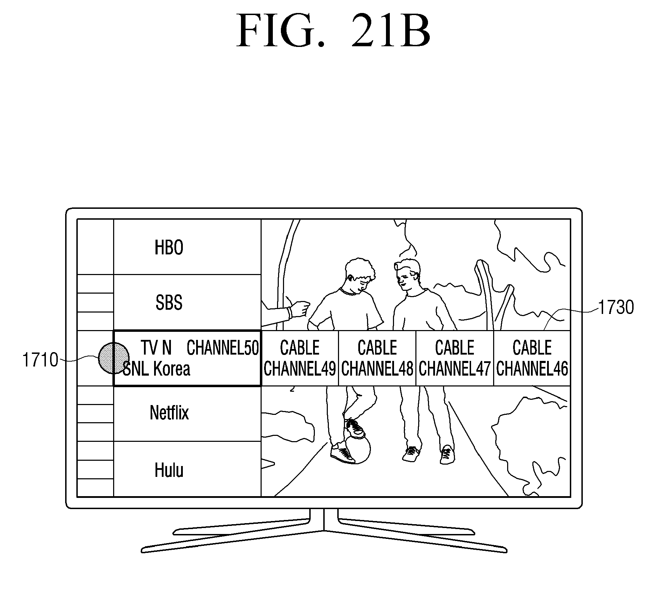

In another example, with a GUI 1710 guiding that the mode of the display apparatus is the first mode displayed as illustrated in FIG. 21A, in response to a predetermined third user command being input, at least one of the position and the shape of the GUI 1710 may be changed in order to guide that the mode of the display apparatus 100 is the third mode as illustrated in FIG. 21B. Furthermore, a library list 1730 that includes channel 49 to channel 46 classified by a predetermined classifying standard, for example, 'cable broadcast channels that the user prefers', may be displayed.

Furthermore, the semicircular GUI 1710 may be converted directly from the first mode to the third mode according to a command for moving the semicircular 1710 in a predetermined direction, for example in a left direction by or more than a predetermined distance, and the semicircular GUI 1710 may be converted from the third mode to the first mode according to a command for moving the GUI in an opposite direction, that is, a right direction. For example, the command may be input by a touch drag input being made by a predetermined distance in a predetermined direction on the touch pad, or by a predetermined direction key being pressed for or more than a predetermined period of time, or by the pointing apparatus being moved by a predetermined distance in a predetermined direction.

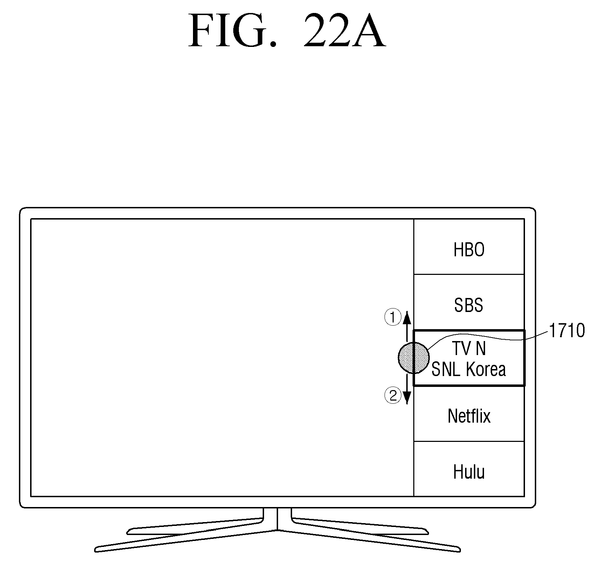

In another example, as illustrated in FIG. 22A, in response to a user command being input for moving the position of the GUI 1710 in an upper direction(↑) or a lower direction(↓) in the second mode wherein the content list is displayed together with the image contents, the highlight 10 and GUI 1710 may be moved in a corresponding direction on the content list, or the content list itself may be moved in a corresponding direction.

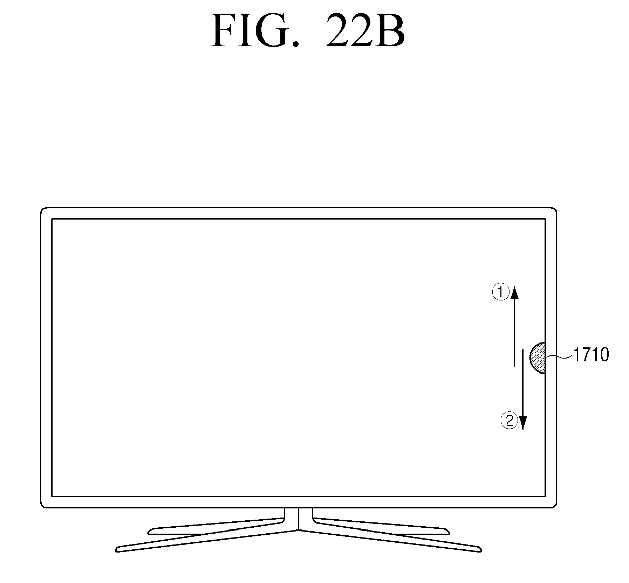

Furthermore, as illustrated in FIG. 22B, with the GUI 1710 guiding that the mode of the display apparatus 100 is the first mode displayed, in response to a user command being input for moving the GUI 1710 by or more than a predetermined distance in a certain direction, for example, in an upper direction or a lower direction, at least one of the shape and the color of the GUI 1710 may be changed using certain user information and information that a certain user predetermined while the mode of the display apparatus 100 is converted from the first mode to the second mode.

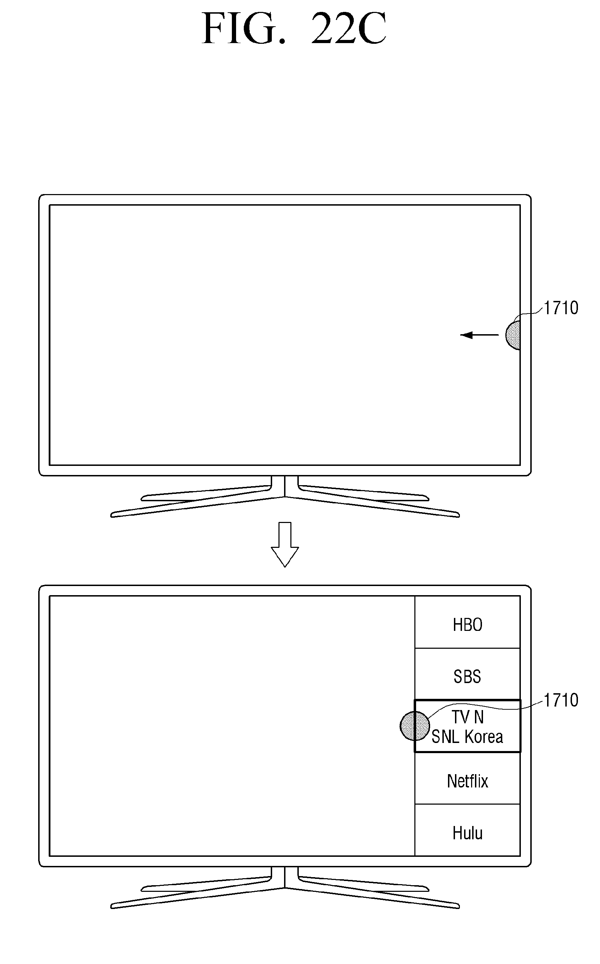

Furthermore, as illustrated in FIG. 22C, in response to a user command for moving the semicircular GUI 1710 being moved in a predetermined direction, for example to the left direction, the mode of the display apparatus 100 may be converted from the first mode to the second mode.

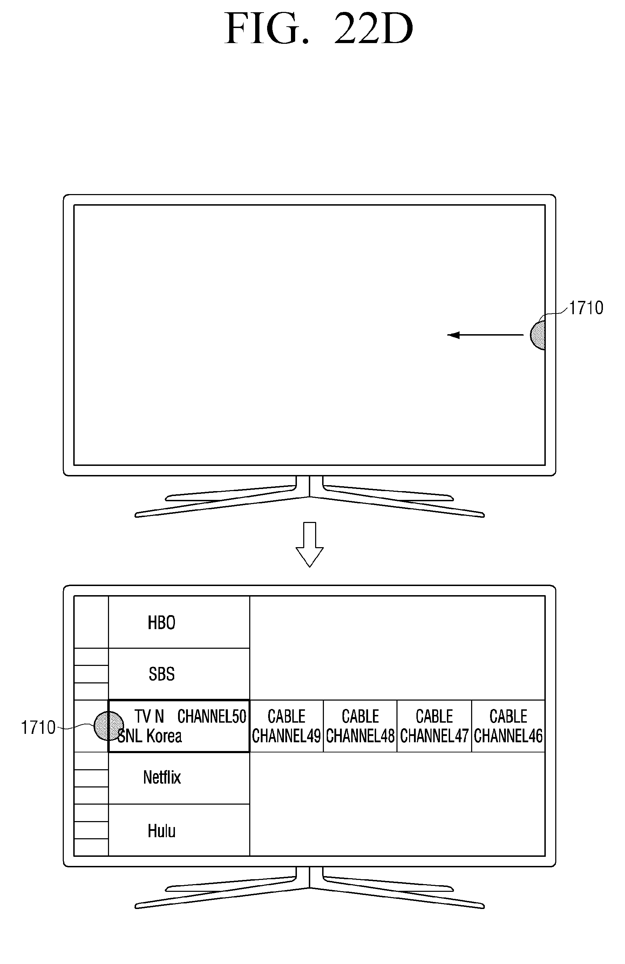

Furthermore, as illustrated in FIG. 22D, in response to a user command for moving the semicircular GUI 1710 by or more than a predetermined distance in a predetermined direction, for example, in a left direction, being input, the mode of the display apparatus 200 may be converted from the first mode to the third mode.

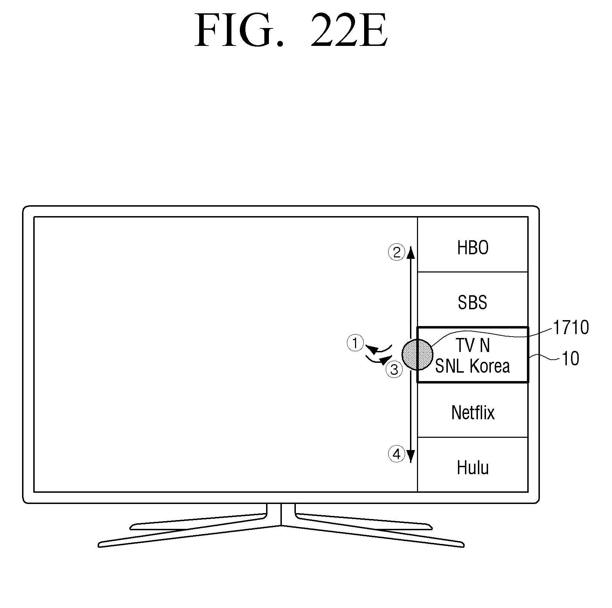

Furthermore, as illustrated in FIG. 22E, in response to a user command for drawing a circle ① with respect to the circular GUI 1710 in a left direction being input, the content list may be moved in a predetermined direction (for example, ② direction). In this case, the GUI 1710 and the highlight 10 may be moved in corresponding directions as well.

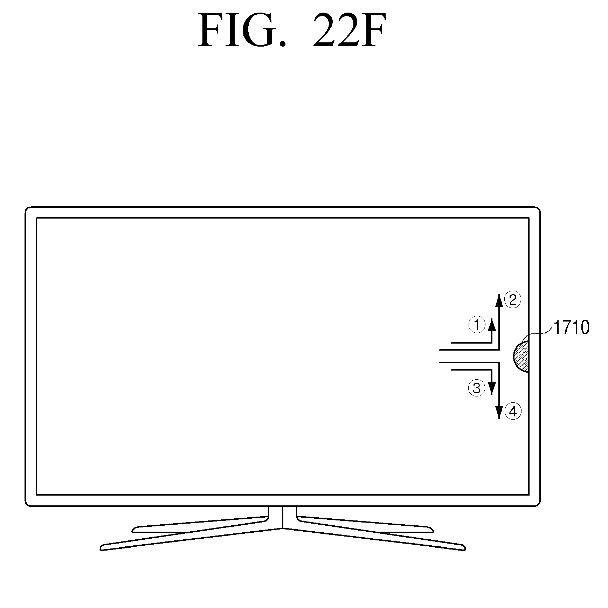

Furthermore, as illustrated in FIG. 22F, with the mode of the display apparatus 100 being the first mode, in response to a user command for moving in ① or ③ direction with respect to the semicircular GUI 1710 being input, a cursor may be moved in the corresponding direction on the content list, or the content list may be moved in the corresponding direction. Furthermore, with the mode of the display apparatus 100 being the first mode, in response the user command in the ① or ③ direction (for example, a motion bigger than ① or ③ with respect to the semicircular GUI 1710 being input, the cursor on the library content list may be moved in the corresponding direction or the library content list may be moved in the corresponding direction as the mode of the display apparatus 100 is changed to the third mode.

However, it is understood that one or more other exemplary embodiments are not limited thereto, and screen conversion corresponding to the user command and the movement to the content area that the user desires may be changed in various directions by user setting.

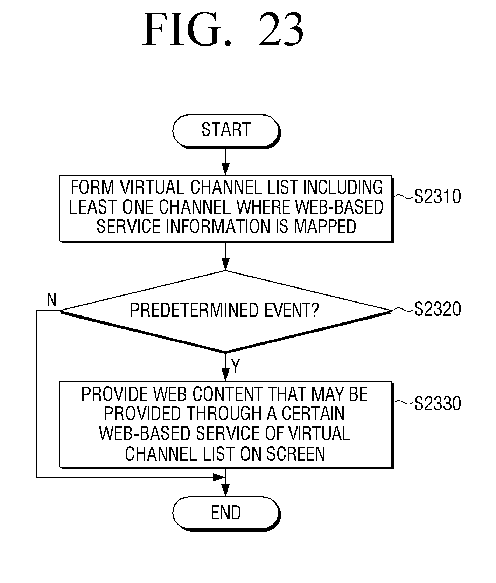

FIG. 23 is a flowchart for explaining a control method of a display apparatus according to an exemplary embodiment.

According to the control method of a display apparatus illustrated in FIG. 23, a virtual channel list that includes at least one channel to which web-based service information is mapped is configured (operation S2310).

Next, in response to a predetermined event occurring (operation S2320:Y), from the virtual channel list that includes at least one channel where at least one broadcast channel and web-based service information is mapped, a web content that may be provided through a certain web-based service may be provided on a screen (operation S2330).

Furthermore, at operation S2330, in response to a channel zapping command being input, channel zapping is performed successively based on the virtual channel list, and in response to a channel to which the web-based service information is mapped being selected, at least one web content being provided through the web-based service corresponding to the selected channel may be provided.

Also, at operation S2330, in response to a channel to which the web-based service information is mapped being selected, the web content may be automatically reproduced on the screen based on URL information of the web content provided through the web-based service corresponding to the selected channel.

Moreover, at operation S2330, in response to the virtual channel list being displayed and one channel being selected from the virtual channel list according to a channel browsing command, a web content list including at least one web content provided through the web-based service mapped to the second channel information may be displayed. In this case, the at least one web content provided through the web-based service mapped to the selected channel may be listed in a predetermined order (e.g., an update order) and be provided. Herein, the at least one web content included in the web content list may be provided in a format including at least one of a web content title, a reproducing time, a web content source, and summary information on a web content thumbnail.

Additionally, at operation S2330, in response to one web content being selected from the web content list, the web content may be reproduced based on the URL information mapped to the selected web content.

The control method may further include displaying a UI screen that groups the channel information to which the web-based service information is mapped and the web content information that may be provided by the web-based service according to a predetermined standard based on information received from a server that manages the web-based service and web content that may be provided in a channel format according to a predetermined event. In this case, the control method may add the channel information to which the web-based service information is mapped selected according to a user's command on the UI screen to the virtual channel list. Herein, the UI screen may group the channel information to which the web-based service information is mapped according to at least one of a channel genre, a number of channel subscribers, a channel popularity, and user account information.

Meanwhile, at least one channel to which the web-based service information is mapped may be an IP address based channel that provides service through the web, and may include at least one of a social media channel, a paid media channel, and a self-produced channel.

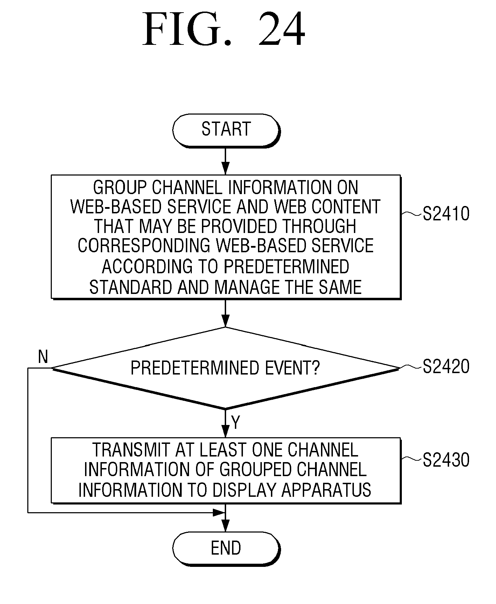

FIG. 24 is a flowchart for explaining a control method of a server according to another exemplary embodiment.

According to the control method of a server illustrated in FIG. 24, information on the web-based service and the web content that may be provided through the web-based service is stored in a predetermined channel and managed (operation S2410).

Then, in response to a predetermined event occurring (operation S2420:Y), of the grouped channel information, at least one channel information is transmitted to the display apparatus (operation S2430).

At operation 2410, the channel information to which the web-based service is mapped may be grouped according to at least one of a channel genre, a number of channel subscribers, a channel popularity, and user account information and be managed. Herein, at least one channel to which the web-based service is mapped may be an IP address based channel that provides the web-based service.

At operation S2430, in response to receiving a request (e.g., a subscription request) for a channel providing the web-based service from the display apparatus, detailed information on the corresponding channel may be transmitted to the display apparatus. Specifically, in response to receiving a subscription request for the channel providing the web-based service from the display apparatus that performs channel zapping based on a virtual channel list that includes at least one broadcast channel and at least one channel to which the web-based service is mapped, information on the corresponding channel may be transmitted to the display apparatus such that the channel for which the subscription request is received may be added to the virtual channel list.

As described above, according to various exemplary embodiments, web-based contents are provided in a channel format that is familiar to the user, thereby improving user convenience. Furthermore, contents scattered over various image platforms (or accounts) may be easily discovered through one platform and may be subscribed continuously.

The display apparatus method and the server control method according to the aforementioned various exemplary embodiments may be realized in a program and be provided in a display apparatus and server.

For example, there may be provided a non-transitory computer readable medium where a program is stored that configures a virtual channel list that includes at least one channel to which the web-based service information is mapped and provides a web content that may be provided through a certain web-based service of the virtual channel list according to a predetermined event.

A non-transitory computer readable medium refers to a computer readable medium that stores data not for a short period of time such as a register, cache and memory but that stores data semi-permanently. Specifically, the various aforementioned applications or programs may be stored in a non-transitory computer readable medium such as a CD, DVD, hard disk, blue-ray disk, USB, memory card, and ROM and the like and be provided. Additionally, it is understood that one or more of the above-described elements, components, modules, etc., may be implemented as software, as hardware (e.g., at least one processor or processing element, a memory, circuitry, etc.), or as a combination of software and hardware.

Although a few exemplary embodiments have been shown and described, it would be appreciated by those skilled in the art that changes may be made in this embodiment without departing from the principles and spirit of the invention, the scope of which is defined in the claims and their equivalents.

## Claims

1. A display apparatus comprising:
a display configured to display a screen; and
a processor configured to output for display, on the screen, a virtual channel list that includes at least one channel to which web-based service information is mapped, and to output for display, on the screen, a web content obtainable through a web-based service of the at least one channel of the virtual channel list according to a predetermined event.

2. The apparatus according to claim 1, further comprising:
a storage configured to store the virtual channel list that includes the at least one channel to which the web-based service information is mapped,
wherein the processor is configured to perform, in response to a channel zapping command being input, channel zapping on channels included in the virtual channel list successively, and to provide, in response to a channel to which the web-based service information is mapped being selected by the performed channel zapping, at least one web content provided through the web-based service corresponding to the selected channel.

3. The apparatus according to claim 2, wherein the processor is configured to, in response to the channel to which the web-based service information is mapped being selected, automatically reproduce, on the screen, the web content on the screen based on URL information of the web content provided through the web-based service corresponding to the selected channel.

4. The apparatus according to anyone of claim 1 to 3 , wherein the processor is configured to output for display, on the screen, the virtual channel list, and in response to a channel being selected on the virtual channel list according to a channel browsing command, output for display, on the screen, a web content list that includes at least one web content provided through the web-based service mapped to the selected channel information.

5. The apparatus according to claim 4, wherein the processor is configured to output for display, on the screen, a list of the at least one web content provided through the web-based service mapped to the selected channel successively based on a time point when the web content is updated.

6. The apparatus according to claim 4 or 5, wherein the processor is configured to, in response to one web content being selected on the list, reproduce, on the screen, the web content based on URL information mapped to the selected web content.

7. The apparatus according to anyone of claim 4 to 6, wherein the processor is configured to control to move a channel on the virtual channel list in a predetermined direction according to the channel browsing command, and to arrange channel information of the selected channel on a predetermined area of the screen.

8. The apparatus according to anyone of claim 1 to 7, further comprising:
a communicator configured to communicate with a server that manages the web-based service and web contents obtainable through the web-based service in a channel format,
wherein the processor is configured to output for display a UI screen that groups the channel information to which the web-based service information is mapped and web content information of the web contents obtainable through the web-based service according to a predetermined standard based on information received from the server according to a predetermined event.

9. The apparatus according to anyone of claim 1 to 8, wherein the processor is configured to add, to the virtual channel list, the channel information to which the web-based service information is mapped selected according to the user command on the UI screen.

10. The apparatus according to anyone of claim 1 to 9, wherein the at least one channel to which the web-based service information is mapped includes a channel that provides a social platform service.

11. The apparatus according to anyone of claim 1 to 10, wherein the virtual channel list further includes at least one channel corresponding to a television broadcasting service, distinct from the web-based service.

12. A server comprising:
a communicator configured to communicate with an image processing apparatus;
a storage configured to store information on a web-based service and on web contents provided through the web-based service in a predetermined channel format; and
a processor configured to group channel information on the web-based service and the web contents provided through the web-based service, and to transmit at least one channel information of the grouped channel information to the image processing apparatus.

13. The server according to claim 12, wherein the processor is configured to transmit the grouped channel information to the image processing apparatus according to a predetermined event.

14. The server according to claim 12 or 13, wherein the processor is configured to transmit, in response to receiving, from the display apparatus, a subscription request for a channel that provides the web-based service, detailed information on the channel to the image processing apparatus.

15. A control method of an image processing apparatus, the method comprising:
outputting, on a screen for display, a virtual channel list that includes at least one channel to which web-based service information is mapped; and
outputting, on the screen, a web content obtainable through a web-based service of the at least one channel of the virtual channel list according to a predetermined event.
